# EUROPEAN PATENT APPLICATION

(11) **EP 4 694 565 A1**
(43) Date of publication of application: **11.02.2026**
(21) Application number: 24784105.9
(22) Date of filing: 26.03.2024
(51) Int. Cl.: H04W 76/27

(54) **COMMUNICATION METHOD AND APPARATUS**

(30) Priority: 07.04.2023 CN 202310370647
(71) Applicant: Datang Mobile Communications Equipment Co., Ltd., Beijing 100085 (CN)
(72) Inventor: LUO, Chen, Beijing 100085 (CN); WANG, Jiaqing, Beijing 100085 (CN); SU, Yuwan, Beijing 100085 (CN); YANG, Meiying, Beijing 100085 (CN)
(74) Representative: Ipsilon
(86) International application number: PCT/CN2024/083706
(87) International publication number: WO 2024/208020

(57) **Abstract**

Embodiments of the present disclosure provide a communication method and apparatus. The method comprises: receiving, in a signaling receiving cell, indication signaling sent by a network device; and on the basis of the indication signaling, determining that the network device activates or deactivates cell discontinuous transmission of a target cell.

## Description

### CROSS-REFERENCES TO RELATED APPLICATIONS

The present application claims priority to Chinese patent application No. 202310370647.2, filed on April 7, 2023, entitled "Communication Method and Apparatus", which is incorporated herein by reference in its entirety.

### FIELD

The present application relates to the field of communication technology, and in particular to a communication method and apparatus.

### BACKGROUND

In a carrier aggregation (CA) scenario, during an activation period of cell discontinuous reception (cell DRX), a terminal device can monitor a physical downlink control channel (PDCCH) in a cell. During an inactivation period of the cell DRX, the terminal device may not receive, in a cell, PDCCH other than scheduling broadcast signaling, that is, the terminal device may enter dormancy mode to reduce power consumption thereof.

In the CA scenario, a primary cell (Pcell) can activate or deactivate the cell DRX transmission of a secondary cell (Scell). After activating the cell DRX transmission of the secondary cell, the terminal device can monitor the PDCCH during the activation period of the cell DRX of the secondary cell and enter dormancy mode during the inactivation period of the cell DRX of the secondary cell.

Currently, when a base station activates or deactivates cell discontinuous transmission of a cell has become a technical problem that needs to be solved urgently.

### BRIEF SUMMARY

Embodiments of the present application provide a communication method and apparatus to solve the problem in the related art regarding when a base station activates or deactivates cell discontinuous transmission of a cell.

In a first aspect, an embodiment of the present application provides a communication method, performed by a terminal device, including:
receiving, in a signaling receiving cell, an indication signaling transmitted from a network device; and
determining, based on the indication signaling, that the network device activates or deactivates cell discontinuous transmission of a target cell.

In an embodiment, receiving, in the signaling receiving cell, the indication signaling transmitted from the network device includes:
receiving parameter configuration information; and
receiving, in the signaling receiving cell, the indication signaling transmitted from the network device based on the parameter configuration information.

In an embodiment, the parameter configuration information includes one or more of the following:
cell information of the signaling receiving cell;
a type of the indication signaling; or
a time-frequency-space resource location where the terminal device receives the indication signaling.

In an embodiment, the parameter configuration information is obtained through one or more of configuration via higher layer signaling, definition by protocol, or indication in signaling.

In an embodiment, the time-frequency-space resource location satisfies one or more of the following:
being associated with connected discontinuous reception (C-DRX) of the terminal device; or
being associated with the cell discontinuous transmission.

In an embodiment, the time-frequency-space resource location includes at least one of a time-domain reception location, a frequency-domain resource location, or a space-domain resource location.

In an embodiment, the time-domain reception location is within an activation period of C-DRX.

In an embodiment, the target cell includes one or more of the following:
the signaling receiving cell;
a specific cell;
all serving cells of the terminal device;
all cells in a cell group where the signaling receiving cell is located, where the cell group is a cell group for cell discontinuous transmission;
all cells in a cell group configured by the network device;
all cells in a first C-DRX group; or
all cells in a secondary C-DRX group.

In an embodiment, the specific cell includes a PCell and/or a SCell.

In an embodiment, the signaling receiving cell includes one or more of the following:
a primary cell; or
a secondary cell.

In an embodiment, determining, based on the indication signaling, that the network device activates or deactivates the cell discontinuous transmission of the target cell includes:
determining, based on information indicated by the indication signaling, that the network device activates or deactivates the cell discontinuous transmission of the target cell at a specific time.

In an embodiment, the method further includes:
transmitting, to the network device, acknowledgement information corresponding to the indication signaling.

In an embodiment, the specific time is one or more of the following:
a reception timing of the indication signaling;
a timing that is separated from a reception timing of the indication signaling by a given time interval;
a time associated with a subcarrier spacing (SCS);
associated with a transmitting timing of the acknowledgement information corresponding to the indication signaling; or
an expire time of a specific timer configured by a higher layer signaling.

In an embodiment, the acknowledgement information is carried by one or more of the following signaling:
a L1 signaling;
a medium access control (MAC) layer signaling; or
a radio resource control (RRC) layer signaling.

In an embodiment, the acknowledgement information includes one or more of the following:
hybrid automatic repeat request acknowledgement information (HARQ-ACK);
MAC layer acknowledgement information; or
timer information for acknowledgement information feedback.

In an embodiment, the indication signaling is an activation signaling and/or a deactivation signaling.

In an embodiment, the method further includes:
in case that the network device activates the cell discontinuous transmission of the target cell, performing the cell discontinuous transmission based on transmission configuration information,
where the transmission configuration information includes one or more of the following:
   a specific period defined by a protocol;
   a time interval configured by the network device; or
   transmission configuration information of the cell discontinuous transmission.

In an embodiment, the activation signaling and/or the deactivation signaling is any of the following:
a L1 signaling;
a MAC layer signaling;
an RRC layer signaling; or
associated with a signaling for other purpose.

In an embodiment, the signaling for other purpose is one or more of the following:
a secondary cell deactivation signaling;
a secondary cell activation signaling;
a cell dormancy indication signaling;
a cell wake-up indication signaling; or
a specific bandwidth part (BWP) switching signaling.

In an embodiment, a radio network temporary identifier (RNTI) for scrambling cyclic redundancy check (CRC) of the L1 signaling is one or more of the following:
an RNTI dedicated to network energy saving;
an RNTI dedicated to cell discontinuous transmission;
a cell RNTI (C-RNTI);
a power saving RNTI (PS-RNTI); or
a configured scheduling RNTI (CS-RNTI).

In an emodiment, the cell discontinuous transmission includes one or more of the following:
cell discontinuous transmission (cell DTX);
cell discontinuous reception (cell DRX);
transmission during an activation period of cell DTX;
transmission during an inactivation period of cell DTX;
transmission during an activation period of cell DRX; or
transmission during an inactivation period of cell DRX.

In a second aspect, an embodiment of the present application provides a communication method, performed by a network device, including:
transmitting, in a signaling receiving cell, an indication signaling to a terminal device, where the indication signaling is used for activating or deactivating cell discontinuous transmission of a target cell; and
activating or deactivating the cell discontinuous transmission of the target cell.

In an embodiment, the method further includes:
transmitting parameter configuration information to the terminal device.

In an embodiment, the parameter configuration information includes one or more of the following:
cell information of the signaling receiving cell;
a type of the indication signaling; or
a time-frequency-space resource location where the terminal device receives the indication signaling.

In an embodiment, the parameter configuration information is obtained through one or more of configuration via higher layer signaling, definition by protocol, or indication in signaling.

In an embodiment, the time-frequency-space resource location satisfies one or more of the following:
being associated with C-DRX of the terminal device; or
being associated with the cell discontinuous transmission.

In an embodiment, the time-frequency-space resource location includes at least one of a time-domain reception location, a frequency-domain resource location, or a space-domain resource location.

In an embodiment, the time-domain reception location is within an activation period of C-DRX.

In an embodiment, the target cell includes one or more of the following:
the signaling receiving cell;
a specific cell;
all serving cells of the terminal device;
all cells in a cell group where the signaling receiving cell is located, where the cell group is a cell group for cell discontinuous transmission;
all cells in a cell group configured by the network device;
all cells in a first C-DRX group; or
all cells in a secondary C-DRX group.

In an embodiment, the specific cell includes a PCell and/or a SCell.

In an embodiment, the signaling receiving cell includes one or more of the following:
a primary cell; or
a secondary cell.

In an embodiment, activating or deactivating the cell discontinuous transmission of the target cell includes:
activating or deactivating the cell discontinuous transmission of the target cell at a specific time.

In an embodiment, the method further includes:
receiving acknowledgement information transmitted from the terminal device and corresponding to the indication signaling.

In an embodiment, the specific time is one or more of the following:
a reception timing of the indication signaling;
a timing that is separated from a reception timing of the indication signaling by a given time interval;
a time associated with a subcarrier spacing (SCS);
associated with a transmitting timing of the acknowledgement information corresponding to the indication signaling; or
an expire time of a specific timer configured by a higher layer signaling.

In an embodiment, the acknowledgement information is carried by one or more of the following signaling:
a L1 signaling;
a MAC layer signaling;
an RRC layer signaling.

In an embodiment, the acknowledgement information includes one or more of the following:
HARQ-ACK;
MAC layer acknowledgement information; or
timer information for acknowledgement information feedback.

In an embodiment, the indication signaling is an activation signaling and/or a deactivation signaling.

In an embodiment, the activation signaling and/or the deactivation signaling is any of the following:
a L1 signaling;
a MAC layer signaling;
an RRC layer signaling; or
associated with a signaling for other purpose.

In an embodiment, the signaling for other purpose is one or more of the following:
a secondary cell deactivation signaling;
a secondary cell activation signaling;
a cell dormancy indication signaling;
a cell wake-up indication signaling; or
a specific bandwidth part (BWP) switching signaling.

In an embodiment, an RNTI for scrambling CRC of the L1 signaling is one or more of the following:
an RNTI dedicated to network energy saving;
an RNTI dedicated to cell discontinuous transmission;
a C-RNTI;
a PS-RNTI; or
a CS-RNTI.

In an embodiment, the cell discontinuous transmission includes one or more of the following:
cell DTX;
cell DRX;
transmission during an activation period of cell DTX;
transmission during an inactivation period of cell DTX;
transmission during an activation period of cell DRX; or
transmission during an inactivation period of cell DRX.

In a third aspect, an embodiment of the present application further provides a communication apparatus, including a memory, a transceiver, and a processor,
where the memory is used for storing a computer program;
the transceiver is used for transmitting and receiving data under control of the processor; and
the processor is used for reading the computer program in the memory and performing following operations:
   receiving, in a signaling receiving cell, an indication signaling transmitted from a network device; and
   determining, based on the indication signaling, that the network device activates or deactivates cell discontinuous transmission of a target cell.

In an embodiment, receiving, in the signaling receiving cell, the indication signaling transmitted from the network device includes:
receiving parameter configuration information; and
receiving, in the signaling receiving cell, the indication signaling transmitted from the network device based on the parameter configuration information.

In an embodiment, the parameter configuration information includes one or more of the following:
cell information of the signaling receiving cell;
a type of the indication signaling; or
a time-frequency-space resource location where the terminal device receives the indication signaling.

In an embodiment, the parameter configuration information is obtained through one or more of configuration via higher layer signaling, definition by protocol, or indication in signaling.

In an embodiment, the time-frequency-space resource location satisfies one or more of the following:
being associated with connected discontinuous reception (C-DRX) of the terminal device; or
being associated with the cell discontinuous transmission.

In an embodiment, the time-frequency-space resource location includes at least one of a time-domain reception location, a frequency-domain resource location, or a space-domain resource location.

In an embodiment, the time-domain reception location is within an activation period of C-DRX.

In an embodiment, the target cell includes one or more of the following:
the signaling receiving cell;
a specific cell;
all serving cells of the terminal device;
all cells in a cell group where the signaling receiving cell is located, where the cell group is a cell group for cell discontinuous transmission;
all cells in a cell group configured by the network device;
all cells in a first C-DRX group; or
all cells in a secondary C-DRX group.

In an embodiment, the specific cell includes a PCell and/or a SCell.

In an embodiment, the signaling receiving cell includes one or more of the following:
a primary cell; or
a secondary cell.

In an embodiment, determining, based on the indication signaling, that the network device activates or deactivates cell discontinuous transmission of a target cell includes:
determining, based on information indicated by the indication signaling, that the network device activates or deactivates the cell discontinuous transmission of the target cell at a specific time.

In an embodiment, the processor is further used for:
transmitting, to the network device, acknowledgement information corresponding to the indication signaling.

In an embodiment, the specific time is one or more of the following:
a reception timing of the indication signaling;
a timing that is separated from a reception timing of the indication signaling by a given time interval;
a time associated with a subcarrier spacing (SCS);
associated with a transmitting timing of the acknowledgement information corresponding to the indication signaling; or
an expire time of a specific timer configured by a higher layer signaling.

In an embodiment, the acknowledgement information is carried by one or more of the following signaling:
a L1 signaling;
a medium access control (MAC) layer signaling; or
a radio resource control (RRC) layer signaling.

In an embodiment, the acknowledgement information includes one or more of the following:
hybrid automatic repeat request acknowledgement information (HARQ-ACK);
MAC layer acknowledgement information; or
timer information for acknowledgement information feedback.

In an embodiment, the indication signaling is an activation signaling and/or a deactivation signaling.

In an embodiment, the processor is further used for:
in case that the network device activates the cell discontinuous transmission of the target cell performs the cell discontinuous transmission based on transmission configuration information,
where the transmission configuration information includes one or more of the following:
   a specific period defined by a protocol;
   a time interval configured by the network device; or
   transmission configuration information of the cell discontinuous transmission.

In an embodiment, the activation signaling and/or the deactivation signaling is any of the following:
a L1 signaling;
a MAC layer signaling;
an RRC layer signaling; or
associated with a signaling for other purpose.

In an embodiment, the signaling for other purpose is one or more of the following:
a secondary cell deactivation signaling;
a secondary cell activation signaling;
a cell dormancy indication signaling;
a cell wake-up indication signaling; or
a specific bandwidth part (BWP) switching signaling.

In an embodiment, a radio network temporary identifier (RNTI) for scrambling cyclic redundancy check (CRC) of the L1 signaling is one or more of the following:
an RNTI dedicated to network energy saving;
an RNTI dedicated to cell discontinuous transmission;
a cell RNTI (C-RNTI);
a power saving RNTI (PS-RNTI); or
a configured scheduling RNTI (CS-RNTI).

In an embodiment, the cell discontinuous transmission includes one or more of the following:
cell discontinuous transmission (cell DTX);
cell discontinuous reception (cell DRX);
transmission during an activation period of cell DTX;
transmission during an inactivation period of cell DTX;
transmission during an activation period of cell DRX; or
transmission during an inactivation period of cell DRX.

In a fourth aspect, an embodiment of the present application further provides a communication apparatus, including a memory, a transceiver, and a processor,
where the memory is used for storing a computer program;
the transceiver is used for transmitting and receiving data under control of the processor; and
the processor is used for reading the computer program in the memory and perform following operations:
   transmitting, in a signaling receiving cell, an indication signaling to a terminal device, where the indication signaling is used for activating or deactivating cell discontinuous transmission of a target cell; and
   activating or deactivating the cell discontinuous transmission of the target cell.

In an embodiment, the processor is further used for:
transmitting parameter configuration information to the terminal device.

In an embodiment, the parameter configuration information includes one or more of the following:
cell information of the signaling receiving cell;
a type of the indication signaling; or
a time-frequency-space resource location where the terminal device receives the indication signaling.

In an embodiment, the parameter configuration information is obtained through one or more of configuration via higher layer signaling, definition by protocol, or indication in signaling.

In an embodiment, the time-frequency-space resource location satisfies one or more of the following:
being associated with C-DRX of the terminal device; or
being associated with the cell discontinuous transmission.

In an embodiment, the time-frequency-space resource location includes at least one of a time-domain reception location, a frequency-domain resource location, or a space-domain resource location.

In an embodiment, the time-domain reception location is within an activation period of C-DRX.

In an embodiment, the target cell includes one or more of the following:
the signaling receiving cell;
a specific cell;
all serving cells of the terminal device;
all cells in a cell group where the signaling receiving cell is located, where the cell group is a cell group for cell discontinuous transmission;
all cells in a cell group configured by the network device;
all cells in a first C-DRX group; or
all cells in a secondary C-DRX group.

**In** an embodiment, the specific cell includes a PCell and/or a SCell.

**In** an embodiment, the signaling receiving cell includes one or more of the following:
a primary cell; or
a secondary cell.

**In** an embodiment, activating or deactivating the cell discontinuous transmission of the target cell includes:
activating or deactivating the cell discontinuous transmission of the target cell at a specific time.

In an embodiment, the processor is further used for:
receiving acknowledgement information transmitted from the terminal device and corresponding to the indication signaling.

In an embodiment, the specific time is one or more of the following:
a reception timing of the indication signaling;
a timing that is separated from a reception timing of the indication signaling by a given time interval;
a time associated with a subcarrier spacing (SCS);
associated with a transmitting timing of the acknowledgement information corresponding to the indication signaling; or
an expire time of a specific timer configured by a higher layer signaling.

In an embodiment, the acknowledgement information is carried by one or more of the following signaling:
a L1 signaling;
a MAC layer signaling; or
an RRC layer signaling.

In an embodiment, the acknowledgement information includes one or more of the following:
HARQ-ACK;
MAC layer acknowledgement information; or
timer information for acknowledgement information feedback.

In an embodiment, the indication signaling is an activation signaling and/or a deactivation signaling.

In an embodiment, the activation signaling and/or the deactivation signaling is any of the following:
a L1 signaling;
a MAC layer signaling;
an RRC layer signaling; or
associated with a signaling for other purpose.

In an embodiment, the signaling for other purpose is one or more of the following:
a secondary cell deactivation signaling;
a secondary cell activation signaling;
a cell dormancy indication signaling;
a cell wake-up indication signaling; or
a specific bandwidth part (BWP) switching signaling.

In an embodiment, an RNTI for scrambling CRC of the L1 signaling is one or more of the following:
an RNTI dedicated to network energy saving;
an RNTI dedicated to cell discontinuous transmission;
a C-RNTI;
a PS-RNTI; or
a CS-RNTI.

In an embodiment, the cell discontinuous transmission includes one or more of the following:
cell DTX;
cell DRX;
transmission during an activation period of cell DTX;
transmission during an inactivation period of cell DTX;
transmission during an activation period of cell DRX; or
transmission during an inactivation period of cell DRX.

In a fifth aspect, an embodiment of the present application further provides a communication apparatus, used in a terminal device, including:
a receiving module, used for receiving, in a signaling receiving cell, an indication signaling transmitted from a network device; and
an activating module, used for determining, based on the indication signaling, that the network device activates or deactivates cell discontinuous transmission of a target cell.

In an embodiment, the receiving module is used for:
receiving parameter configuration information; and
receiving, in the signaling receiving cell, the indication signaling transmitted from the network device based on the parameter configuration information.

In an embodiment, the parameter configuration information includes one or more of the following:
cell information of the signaling receiving cell;
a type of the indication signaling; or
a time-frequency-space resource location where the terminal device receives the indication signaling.

In an embodiment, the parameter configuration information is obtained through one or more of configuration via higher layer signaling, definition by protocol, or indication in signaling.

In an embodiment, the time-frequency-space resource location satisfies one or more of the following:
being associated with connected discontinuous reception (C-DRX) of the terminal device; or
being associated with the cell discontinuous transmission.

In an embodiment, the time-frequency-space resource location includes at least one of a time-domain reception location, a frequency-domain resource location, or a space-domain resource location.

In an embodiment, the time-domain reception location is within an activation period of C-DRX.

In an embodiment, the target cell includes one or more of the following:
the signaling receiving cell;
a specific cell;
all serving cells of the terminal device;
all cells in a cell group where the signaling receiving cell is located, where the cell group is a cell group for cell discontinuous transmission;
all cells in a cell group configured by the network device;
all cells in a first C-DRX group; or
all cells in a secondary C-DRX group.

In an embodiment, the specific cell includes a PCell and/or a SCell.

In an embodiment, the signaling receiving cell includes one or more of the following:
a primary cell; or
a secondary cell.

In an embodiment, the activating module is used for:
determining, based on information indicated by the indication signaling, that the network device activates or deactivates the cell discontinuous transmission of the target cell at a specific time.

In an embodiment, the communication apparatus further includes a transmitting module,
where the transmitting module is used for transmitting, to the network device, acknowledgement information corresponding to the indication signaling.

In an embodiment, the specific time is one or more of the following:
a reception timing of the indication signaling;
a timing that is separated from a reception timing of the indication signaling by a given time interval;
a time associated with a subcarrier spacing (SCS);
associated with a transmitting timing of the acknowledgement information corresponding to the indication signaling; or
an expire time of a specific timer configured by a higher layer signaling.

In an embodiment, the acknowledgement information is carried by one or more of the following signaling:
a L1 signaling;
a medium access control (MAC) layer signaling; or
a radio resource control (RRC) layer signaling.

In an embodiment, the acknowledgement information includes one or more of the following:
hybrid automatic repeat request acknowledgement information (HARQ-ACK);
MAC layer acknowledgement information; or
timer information for acknowledgement information feedback.

In an embodiment, the indication signaling is an activation signaling and/or a deactivation signaling.

In an embodiment, the communication apparatus further includes a transmission module;
the transmission module is used for, in case that the network device activates the cell discontinuous transmission of the target cell, performing the cell discontinuous transmission based on transmission configuration information,
where the transmission configuration information includes one or more of the following:
   a specific period defined by a protocol;
   a time interval configured by the network device; or
   transmission configuration information of the cell discontinuous transmission.

In an embodiment, the activation signaling and/or the deactivation signaling is any of the following:
a L1 signaling;
a MAC layer signaling;
an RRC layer signaling; or
associated with a signaling for other purpose.

In an embodiment, the signaling for other purpose is one or more of the following:
a secondary cell deactivation signaling;
a secondary cell activation signaling;
a cell dormancy indication signaling;
a cell wake-up indication signaling; or
a specific bandwidth part (BWP) switching signaling.

In an embodiment, a radio network temporary identifier (RNTI) for scrambling cyclic redundancy check (CRC) of the L1 signaling is one or more of the following:
an RNTI dedicated to network energy saving;
an RNTI dedicated to cell discontinuous transmission;
a cell RNTI (C-RNTI);
a power saving RNTI (PS-RNTI); or
a configured scheduling RNTI (CS-RNTI).

In an embodiment, the cell discontinuous transmission includes one or more of the following:
cell discontinuous transmission (cell DTX);
cell discontinuous reception (cell DRX);
transmission during an activation period of cell DTX;
transmission during an inactivation period of cell DTX;
transmission during an activation period of cell DRX; or
transmission during an inactivation period of cell DRX.

In a sixth aspect, an embodiment of the present application further provides a communication apparatus, used in a network device, including:
a transmitting module, used for transmitting, in a signaling receiving cell, an indication signaling to a terminal device, where the indication signaling is used for activating or deactivating cell discontinuous transmission of a target cell; and
an activating module, used for activating or deactivating the cell discontinuous transmission of the target cell.

In an embodiment, the first transmitting module is further used for transmitting parameter configuration information to the terminal device.

In an embodiment, the parameter configuration information includes one or more of the following:
cell information of the signaling receiving cell;
a type of the indication signaling; or
a time-frequency-space resource location where the terminal device receives the indication signaling.

In an embodiment, the parameter configuration information is obtained through one or more of configuration via higher layer signaling, definition by protocol, or indication in signaling.

In an embodiment, the time-frequency-space resource location satisfies one or more of the following:
being associated with C-DRX of the terminal device; or
being associated with the cell discontinuous transmission.

In an embodiment, the time-frequency-space resource location includes at least one of a time-domain reception location, a frequency-domain resource location, or a space-domain resource location.

In an embodiment, the time-domain reception location is within an activation period of C-DRX.

In an embodiment, the target cell includes one or more of the following:
the signaling receiving cell;
a specific cell;
all serving cells of the terminal device;
all cells in a cell group where the signaling receiving cell is located, where the cell group is a cell group for cell discontinuous transmission;
all cells in a cell group configured by the network device;
all cells in a first C-DRX group; or
all cells in a secondary C-DRX group.

In an embodiment, the specific cell includes a PCell and/or a SCell.

In an embodiment, the signaling receiving cell includes one or more of the following:
a primary cell; or
a secondary cell.

In an embodiment, the activating module is used for:
activating or deactivating the cell discontinuous transmission of the target cell at a specific time.

In an embodiment, the communication apparatus further includes a receiving module;
where the receiving module is used for receiving acknowledgement information transmitted from the terminal device and corresponding to the indication signaling.

In an embodiment, the specific time is one or more of the following:
a reception timing of the indication signaling;
a timing that is separated from a reception timing of the indication signaling by a given time interval;
a time associated with a subcarrier spacing (SCS);
associated with a transmitting timing of the acknowledgement information corresponding to the indication signaling; or
an expire time of a specific timer configured by a higher layer signaling.

In an embodiment, the acknowledgement information is carried by one or more of the following signaling:
a L1 signaling;
a MAC layer signaling;
an RRC layer signaling.

In an embodiment, the acknowledgement information includes one or more of the following:
HARQ-ACK;
MAC layer acknowledgement information; or
timer information for acknowledgement information feedback.

In an embodiment, the indication signaling is an activation signaling and/or a deactivation signaling.

In an embodiment, the activation signaling and/or the deactivation signaling is any of the following:
a L1 signaling;
a MAC layer signaling;
an RRC layer signaling; or
associated with a signaling for other purpose.

In an embodiment, the signaling for other purpose is one or more of the following:
a secondary cell deactivation signaling;
a secondary cell activation signaling;
a cell dormancy indication signaling;
a cell wake-up indication signaling; or
a specific bandwidth part (BWP) switching signaling.

In an embodiment, an RNTI for scrambling CRC of the L1 signaling is one or more of the following:
an RNTI dedicated to network energy saving;
an RNTI dedicated to cell discontinuous transmission;
a C-RNTI;
a PS-RNTI; or
a CS-RNTI.

In an embodiment, the cell discontinuous transmission includes one or more of the following:
cell DTX;
cell DRX;
transmission during an activation period of cell DTX;
transmission during an inactivation period of cell DTX;
transmission during an activation period of cell DRX; or
transmission during an inactivation period of cell DRX.

In a seventh aspect, an embodiment of the present application further provides a processor-readable storage medium, storing a computer program, where the computer program is used for causing a processor to perform the steps of the communication method as described with respect to the first aspect above.

In an eighth aspect, an embodiment of the present application further provides a processor-readable storage medium, storing a computer program, where the computer program is used for causing a processor to perform the steps of the communication method as described with respect to the second aspect above.

An embodiment of the present application provide a communication method and apparatus, in which a terminal device can receive, in a signaling receiving cell, an indication signaling transmitted from a network device; and determine, based on the indication signaling, that the network device activates or deactivates cell discontinuous transmission of a target cell, so that the network device activates or deactivates the cell discontinuous transmission of the target cell, solving the problem regarding when a base station activates or deactivates the cell discontinuous transmission of a cell.

### BRIEF DESCRIPTION OF THE DRAWINGS

In order to clearly illustrate the solutions in the embodiments of the present application or the related art, the accompanying drawings used in the description of the embodiments or the related art are briefly introduced below. It should be noted that the drawings in the following description are only some embodiments of the present application. For those of ordinary skill in the art, other drawings can be obtained based on these drawings without creative effort.
FIG. 1 is a first flow chart of a communication method according to an embodiment of the present application;
FIG. 2 is a second flow chart of a communication method according to an embodiment of the present application;
FIG. 3 is a first schematic diagram of activating/deactivating cell discontinuous transmission of different cells or cell groups according to an embodiment of the present application;
FIG. 4 is a first schematic diagram of receiving signaling according to an embodiment of the present application;
FIG. 5 is a second schematic diagram of receiving signaling according to an embodiment of the present application;
FIG. 6 is a third schematic diagram of receiving signaling according to an embodiment of the present application;
FIG. 7 is a second schematic diagram of activating/deactivating cell discontinuous transmission of different cells or cell groups according to an embodiment of the present application;
FIG. 8 is a first structural schematic diagram of a communication apparatus according to an embodiment of the present application;
FIG. 9 is a second structural schematic diagram of a communication apparatus according to an embodiment of the present application;
FIG. 10 is a third structural schematic diagram of a communication apparatus according to an embodiment of the present application;
FIG. 11 is a fourth structural schematic diagram of a communication apparatus according to an embodiment of the present application.

### DETAILED DESCRIPTION

In the present application, the term "include" and its variations can refer to non-restrictive inclusion; the term "or" and its variations can refer to "and/or". The terms "first", "second", and the like in the present application are used to distinguish between similar objects, and are not necessarily used to describe a specific order or sequence. In the application, "plurality" refers to two or more. "And/or" describes the association relationship of associated objects, indicating that three relationships can exist. For example, A and/or B can mean A exists alone, A and B exist at the same time, and B exists alone. The character "/" generally indicates that the previous and next associated objects are in an "or" relationship.
"And/or" in the embodiments of the application describes the association relationship of associated objects, indicating that three relationships can exist. For example, A and/or B can mean A exists alone, A and B exist at the same time, and B exists alone. The character "/" generally indicates that the previous and next associated objects are in an "or" relationship.

In the embodiments of the application, the term "plurality" refers to two or more, and other quantifiers are similar thereto.

The solutions provided by the embodiments of the present application can be applied to a variety of systems, particularly 5G systems. For example, applicable systems can include the global system of mobile communication (GSM) system, the code division multiple access (CDMA) system, the wideband code division multiple access (WCDMA), the general packet radio service (GPRS) system, the long term evolution (LTE) system, the LTE frequency division duplex (FDD) system, the LTE time division duplex (TDD) system, the long term evolution advanced (LTE-A) system, the universal mobile telecommunication system (UMTS), the worldwide interoperability for microwave access (WiMAX) system, and the 5G new radio (NR) system. These various systems include terminal devices and network devices. The systems can also include core network parts, such as the evolved packet system (EPS) and the 5G system (5GS).

Embodiments of the present application relate to a terminal device, which can refer to a device that provide voice and/or data connectivity to users, a handheld device with wireless connectivity, or other processing device connected to a wireless modem. The name of terminal device can vary in different systems. For example, in 5G systems, a terminal device can be referred to as an user equipment (UE). A wireless terminal device can communicate with one or more core networks (CNs) via a radio access network (RAN). The wireless terminal device can be a mobile terminal device, such as a mobile phone (also known as "cellular" phone), and a computer with a mobile terminal device. For example, it can be a portable, pocket-sized, handheld, computer-built-in, or in-vehicle mobile device that exchanges voice and /or data with the radio access network. Examples include a personal communication service (PCS) phone, a cordless phone, a session initiated protocol (SIP) phone, a wireless local loop (WLL) station, a personal digital assistant (PDA) and the like. The wireless terminal device can also be referred to as a system, a subscriber unit, a subscriber station, a mobile station, a mobile, a remote station, an access point, a remote terminal, an access terminal, a user terminal, a user agent, or a user device, but is not limited in the embodiments of the present application.

Embodiments of the present application relate to a network device, which can refer to a base station, and the base station can include multiple cells providing services to terminals. Depending on the specific application scenario, a base station can also be referred to as an access point or can be a device in an access network that communicates with a wireless terminal device via one or more sectors over the air interface, or can be referred to other names. The network device can be used to interchange received air frames with internet protocol (IP) packets, acting as a router between the wireless terminal device and the rest of the access network, which can include an internet protocol (IP) communication network. The network device can also coordinate attribute management of the air interface. For example, the network device in the embodiments of the present application can be a base transceiver station (BTSs) in a global system for mobile communication (GSM) or a code division multiple access (CDMA), a NodeB in the wide-band code division multiple access (WCDMA), an evolutionary NodeB (eNB or e-NodeB) in the long term evolution (LTE) system, a 5G base station (gNB) in the next generation system, a relay node, a femto, and a pico in a home evolved NodeB (HeNB), and are not limited in the embodiments of the present application. In some network structures, the network device can include a centralized unit (CU) node and a distributed unit (DU) node, and the centralized unit and the distributed unit can also be geographically separated.

The network device and the terminal device can each use one or more antennas for multiple input multiple output (MIMO) transmission. MIMO transmission can be either a single-user MIMO (SU-MIMO) or a multi-user MIMO (MU-MIMO). Depending on the form and number of antenna combinations, MIMO transmission can be 2D-MIMO, 3D-MIMO, FD-MIMO, or massive-MIMO, and can also be diversity transmission, precoding transmission, or beamforming transmission.

The accompanying drawings in the embodiments of the present application are combined below to clearly and completely describe the solutions in the embodiments of the present application. Obviously, the embodiments described are only some embodiments, but not all of the embodiments of the present application. Based on the embodiments of the present application, all other embodiments obtained by those skilled in the art without making any creative efforts shall all fall within the scope of protection of the present application.

An embodiment of the present application provides a communication method and apparatus for resolving the technical issue regarding when a network device activates or deactivates cell discontinuous transmission of a cell. The method and the apparatus are based on the same application concept. Since the principle of solving problems by the method and the apparatus are similar, the implementation of the apparatus and the method can refer to each other, and the repeated parts will not be repeated.

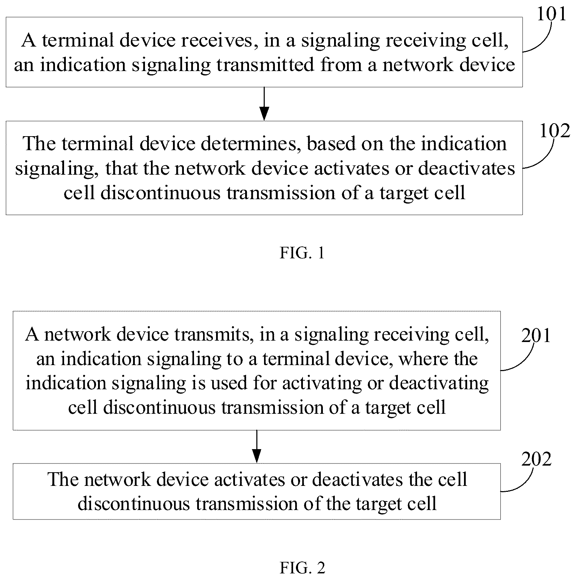

FIG. 1 is a first flow chart of a communication method according to an embodiment of the present application. As shown in FIG. 1, the method includes:
Step 101: A terminal device receives, in a signaling receiving cell, an indication signaling transmitted from a network device.
The indication signaling is used for activating or deactivating cell discontinuous transmission of a target cell.
Step 102: The terminal device determines, based on the indication signaling, that the network device activates or deactivates the cell discontinuous transmission of the target cell.

In the communication method provided in the embodiment of FIG. 1, the network device can activate or deactivate the cell discontinuous tranfsmission of the target cell, and the terminal device can determine, based on the indication signaling transmitted from the network device, that the network device activates or deactivates the cell discontinuous transmission of the target cell, solving the problem in the related art regarding when the network device activates or deactivates the cell discontinuous transmission of a cell.

Base on any embodiment of the present application, receiving, in the signaling receiving cell, the indication signaling transmitted from the network device includes:
receiving parameter configuration information;
receiving, in the signaling receiving cell, the indication signaling transmitted from the network device based on the parameter configuration information.

Base on any embodiment of the present application, determining, based on the indication signaling, that the network device activates or deactivates the cell discontinuous transmission of a target cell includes:
determining, based on information indicated by the indication signaling, that the network device activates or deactivates the cell discontinuous transmission of the target cell at a specific time.

Base on any embodiment of the present application, the communication method provided by the embodiment of the present application further includes: transmitting, to the network device, acknowledgement information corresponding to the indication signaling.

Base on any embodiment of the present application, the communication method provided by the embodiment of the present application further includes:
in case that the network device activates the cell discontinuous transmission of the target cell, performing the cell discontinuous transmission based on transmission configuration information,
where the transmission configuration information includes one or more of the following:
   a specific period defined by a protocol;
   a time interval configured by the network device; or
   transmission configuration information of the cell discontinuous transmission.

In an embodiment, the specific period defined by the protocol can be a period of the cell discontinuous transmission where the indication signaling is located, one or more periods of the cell discontinuous transmission adjacent to the indication signaling, one or more periods of the cell discontinuous transmission with a certain time interval from the indication signaling, or one or more specific periods of the cell discontinuous transmission indicated by the indication signaling. The one or more periods of transmission can be configured by a higher layer signaling or defined by a protocol.

In an embodiment, the time interval configured by the network device can be a dedicated timer configured by a higher layer signaling or can be a specific time period.

In an embodiment, the transmission configuration information of the cell discontinuous transmission includes one or more of the following: a period of the cell discontinuous transmission, an offset of a start position of a period of the cell discontinuous transmission, a start position of an activation period of the cell discontinuous transmission, an end position of an activation period of the cell discontinuous transmission, a start position of an inactivation period of the cell discontinuous transmission, an end position of an inactivation period of the cell discontinuous transmission, or a duration of an activation/inactivation period of the cell discontinuous transmission, and the like.

FIG. 2 is a second flow chart of a communication method according to an embodiment of the present application. As shown in FIG. 2, the method includes:
Step 201: A network device transmittes, in a signaling receiving cell, an indication signaling to a terminal device, where the indication signaling is used for activating or deactivating cell discontinuous transmission of a target cell.
Step 202: The network device activates or deactivates the cell discontinuous transmission of the target cell.

In the communication method provided in the embodiment of FIG. 2, the network device can activate or deactivate the cell discontinuous transmission of the target cell, solving the problem in the related art that the network device cannot activate or deactivate the cell discontinuous transmission of a cell.

Base on any embodiment of the present application, the communication method provided by the embodiment of the present application further includes: the network device transmitting parameter configuration information to the terminal device.

Base on any embodiment of the present application, the network device activating or deactivating the cell discontinuous transmission of the target cell includes:
the network device activating or deactivating the cell discontinuous transmission of the target cell at a specific time.

Base on any embodiment of the present application, the communication method provided by the embodiment of the present application further includes: the network device receiving acknowledgement information transmitted from the terminal device and corresponding to the indication signaling.

Base on any embodiment of the present application, all signaling receiving cells involved include one or more of the following:
a primary cell (PCell); or
a secondary cell (SCell).

Base on any embodiment of the present application, all indication signalings involved are activation signalings and/or deactivation signalings.

In an embodiment, the activation signaling is used for determining that the network device activates the cell discontinuous transmission of the target cell.

In an embodiment, the deactivation signaling is used for determining that the network device deactivates the cell discontinuous transmission of the target cell.

It should be noted that, in case that the indication signaling is an activation signaling and a deactivation signaling, it can indicate that the activation signaling and the deactivation signaling are the same signaling.

Base on any embodiment of the present application, all activation signaling and/or deactivation signaling involved is any of the following:
a L1 signaling;
a medium access control (MAC) layer signaling;
radio resource control (RRC) layer signaling; or
associated with a signaling for other purpose.

In an embodiment, the L1 signaling can be a signaling dedicated to the cell discontinuous transmission, or a new information field can be added to the relevant signaling.

In an embodiment, the MAC layer signaling can be a MAC CE dedicated to activation and deactivation of the cell discontinuous transmission.

In an embodiment, the RRC signaling can be a timer dedicated to the discontinuous transmission, or a configured time interval and the like.

The activation signaling and the deactivation signaling can be the same signaling, or can be signaling of the same type, or can be signalings of different types, or can be one or the other.

The activation signaling and the deactivation signaling are used in at least one of the following ways 01 to 05.

Way 01: In case that the activation signaling and the deactivation signaling are the same signaling, a first L1 signaling activates the cell discontinuous transmission of a specific cell or a specific cell group, and the first L1 signaling deactivates the cell discontinuous transmission of the specific cell or the specific cell group. The specific cell includes a PCell and/or a SCell.

Way 02: In case that the activation signaling and the deactivation signaling are signalings of different types, a first L1 signaling (activation signaling) activates the cell discontinuous transmission of a PCell and/or a SCell, and the RRC signaling (timer) (deactivation signaling) deactivates the cell discontinuous transmission of the PCell and/or the SCell.

Way 03: In case that the activation signaling and the deactivation signaling are signalings of the same type, a first L1 signaling activates the cell discontinuous transmission of a PCell and/or a SCell, and a second L1 signaling deactivates the cell discontinuous transmission of the PCell and/or the SCell. The activation signaling and the deactivation signaling are different L1 signaling.

For example, the first L1 signaling (activation signaling) activating the cell discontinuous transmission of the PCell and/or the SCell is a dedicated signaling, and the second L1 signaling (deactivation signaling) deactivating the cell discontinuous transmission of the PCell and/or the SCell is the L1 signaling containing SCell wake-up indication information. That is, in case that the terminal device receives, in an SCell, the SCell wake-up indication, it stops the transmission during an inactivation period of the cell discontinuous transmission or it deactivates the cell discontinuous transmission.

For example, the first L1 signaling (activation signaling) activating the cell discontinuous transmission of the PCell and/or the SCell is the L1 signaling containing a PCell dormancy indication signaling and/or SCell dormancy indication information, and the second L1 signaling (deactivation signaling) deactivating the cell discontinuous transmission of the PCell and/or the SCell is a dedicated signaling. That is, when the terminal device receives the L1 signaling containing the PCell dormancy indication signaling and/or the SCell dormancy indication information, it activates the cell discontinuous transmission. When the terminal device receives the second signaling, it deactivates the cell discontinuous transmission of the PCell and/or the SCell. Here, the PCell dormancy indication signaling can be an energy-saving signal used to instruct the terminal not to start a timer for the activation period of the C-DRX.

Way 04: In case that the activation signaling and the deactivation signaling are signalings of different types, a first L1 signaling (activation signaling) activates the cell discontinuous transmission of a PCell and/or a SCell, and the MAC signaling (deactivation signaling) deactivates the cell discontinuous transmission of the PCell and/or the SCell.

For example, a second signaling received in the SCell is the L1 signaling, and a fourth signaling received is the a MAC layer signaling; or a second signaling received is the MAC layer signaling, and a fourth signaling received is the RRC layer signaling.

Way 05: In case that the activation signaling and the deactivation signaling are the same signaling, the MAC layer signaling activates the cell discontinuous transmission of a PCell and/or a SCell, and the MAC signaling deactivates the cell discontinuous transmission of the PCell and/or the SCell.

In some embodiments, the signaling for other purpose is one or more of the following:
a secondary cell deactivation signaling;
a secondary cell activation signaling;
a cell dormancy indication signaling;
a cell wake-up indication signaling; or
a specific bandwidth part (BWP) switching signaling.

In some embodiments, a radio network temporary identifier (RNTI) for scrambling cyclic redundancy check (CRC) of the L1 signaling is one or more of the following:
an RNTI dedicated to network energy saving;
an RNTI dedicated to cell discontinuous transmission;
a cell RNTI (C-RNTI);
a power saving RNTI (PS-RNTI); or
a configured scheduling RNTI (CS-RNTI).

Base on any embodiment of the present application, all target cells involved include one or more of the following:
the signaling receiving cell (i.e., the receiving cell of the indication signaling);
a specific cell;
all serving cells of the terminal device;
all cells in a cell group where the signaling receiving cell is located, where the cell group is a cell group for cell discontinuous transmission;
all cells in a cell group configured by the network device;
all cells in a first C-DRX group; or
all cells in a secondary C-DRX group,
where the cell group where the receiving cell of the indication signaling is located, for example, can include a DRX group where the signaling receiving cell is located and/or a DTX group where the signaling receiving cell is located.

Base on any embodiment of the present application, all the cell discontinuous transmission involved includes one or more of the following:
cell discontinuous transmission (cell DTX);
cell discontinuous reception (cell DRX);
transmission during an activation period of cell DTX;
transmission during an inactivation period of cell DTX;
transmission during an activation period of cell DRX; or
transmission during an inactivation period of cell DRX.

Base on any embodiment of the present application, all acknowledgement information involved can be carried by one or more of the following signaling:
a L1 signaling;
a MAC layer signaling; or
an RRC layer signaling.

Base on any embodiment of the present application, all acknowledgement information involved can include one or more of the following:
hybrid automatic repeat request acknowledgement information (HARQ-ACK);
MAC layer acknowledgement information; or
timer information for acknowledgement information feedback.

Base on any embodiment of the present application, all parameter configuration information involved can include one or more of the following:
cell information of the signaling receiving cell;
a type of the indication signaling; or
a time-frequency-space resource location where the terminal device receives the indication signaling.

The type of the indication signaling is, for example, a L1 signaling, a MAC layer signaling, RRC layer signaling, or a protocol-defined signaling.

In an embodiment, the parameter configuration information can be obtained through one or more of configuration via higher layer signaling, definition by protocol, or indication in signaling, and the like.

Base on any embodiment of the present application, all time-frequency-space resource locations involved can satisfy one or more of the following:
being associated with connected discontinuous reception (DRX) of the terminal device; or
being associated with the cell discontinuous transmission.

Base on any embodiment of the present application, all specific time involved can be one or more of the following:
a reception timing of the indication signaling;
a timing that is separated from a reception timing of the indication signaling by a given time interval;
a time associated with a subcarrier spacing (SCS);
associated with a transmitting timing of the acknowledgement information corresponding to the indication signaling; or
an expire time of a specific timer configured by a higher layer signaling.

In an embodiment, the specific time can be a specific symbol or a specific time slot corresponding to the reception timing of the indication signaling. The specific time can also be a symbol adjacent to the reception timing of the indication signaling, or a first symbol of an adjacent time slot or subframe, or a specific symbol of an adjacent time slot or subframe.

In an embodiment, the specific time can be a specific symbol or a specific time slot that is separated from the reception timing by a given time interval. The given time interval can be defined by a protocol or configured by a base station. The specific symbol includes an adjacent symbol, a current symbol, and the like. The specific time slot includes a first symbol of an adjacent time slot or subframe, and a specific symbol of an adjacent time slot or subframe.

Based on any embodiment of the present application, the communication method provided by the present application is described below in combination with the following Case 1, Case 2 and Case 3.

Case 1: The Pcell and the Scell use a common cell discontinuous transmission configuration.

Case 2: Cells in a same DRX group use a common cell discontinuous transmission configuration.

Case 3: Different cells use different cell discontinuous transmission configurations.

First, it is to determine when the network device activates/deactivates, in a PCell and/or a SCell, cell discontinuous transmission of different cells or cell groups.

For Case 1, the terminal device can receive an activation signaling in a PCell and/or a specific SCell, and the activation signaling is used for instructing the network device to activate the cell discontinuous transmission of all cells. The terminal device can also receive a deactivation signaling in a PCell and/or a specific SCell, and the deactivation signaling is used for instructing the network device to deactivate the cell discontinuous transmission of all cells. The specific SCell can be any activated SCell, an SCell configured by the network device, or a first or last cell in a SCell list, or the like.

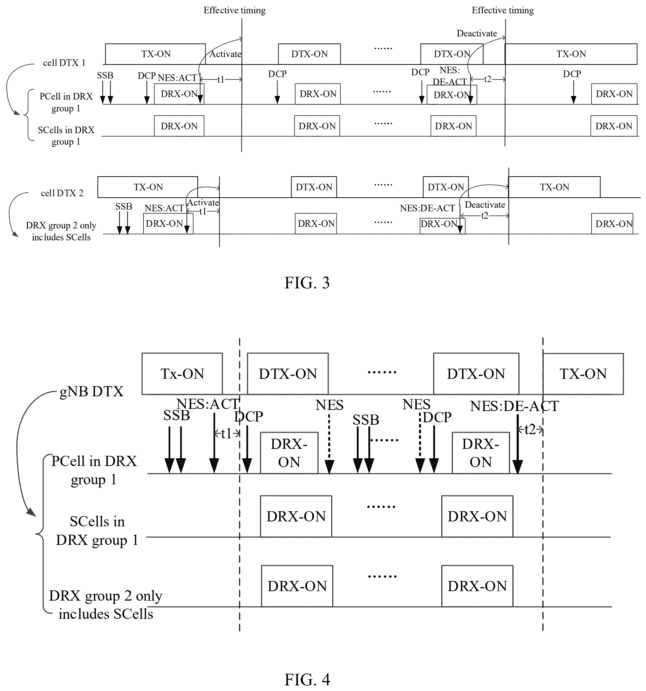

For Case 2, the terminal device can receive an activation signaling in a PCell and/or a specific SCell within a secondary C-DRX group, and the activation signaling is used for instructing the network device to activate the cell discontinuous transmission corresponding to different C-DRX groups (for example, a first C-DRX group, which is different from the secondary C-DRX group). The terminal device can receive a deactivation signaling in a PCell and/or a specific SCell within a secondary C-DRX group, and the deactivation signaling is used for instructing the network device to deactivate the cell discontinuous transmission corresponding to different C-DRX groups. The specific SCell can be at least one cell within the secondary C-DRX group. In an embodiment, the activation signaling or the deactivation signaling can be received in any cell or multiple cells within the C-DRX group of the terminal device. For example, the terminal device can receive, in any cell, the cell discontinuous transmission corresponding to the C-DRX group to which the any cell belongs. The terminal device can also receive, in any cell, the cell discontinuous transmission corresponding to different C-DRX groups. For details, reference is made to the embodiment of FIG. 3.

FIG. 3 is a first schematic diagram of activating/deactivating cell discontinuous transmission of different cells or cell groups according to an embodiment of the present application. As shown in FIG. 3, different cell groups are configured with different cell DTXs. The different cell groups, for example, include a first C-DRX group (DRX group 1) and a secondary C-DRX group (DRX group 2). DRX group 1 is configured with cell DTX 1, and DRX group 2 is configured with cell DTX 2.

For a PCell in DRX group 1, for example, the terminal device receives an activation signaling (NES: ACT) carrying activation indication information during an activation period of the Pcell DTX (DRX-ON), and activates the cell discontinuous transmission of a cell after a first offset value t1 since the activation signaling is received. For example, the terminal device receives a deactivation signaling (NES:DE-ACT) carrying deactivation indication information during an activation period of the Pcell DTX (DRX-ON), and deactivates the cell discontinuous transmission of a cell after a second offset value t2 since the deactivation signaling is received.

In an embodiment, the activation indication information indicates the start of transmission during an activation period of the cell DTX or transmission during an inactivation period of the cell DTX.

In an embodiment, the deactivation indication information indicates the start of transmission during an activation period of the cell DRX or transmission during an inactivation period of the cell DRX.

For each SCell in DRX group 2, for example, the terminal device receives an activation signaling (NES: ACT) carrying activation indication information during an activation period of the Scell DTX (DRX-ON), and activates the cell discontinuous transmission of a cell after a first offset value t1 since the activation signaling is received. For example, the terminal device receives a deactivation signaling (NES:DE-ACT) carrying deactivation indication information during an activation period of the Scell DTX (DRX-ON), and deactivates the cell discontinuous transmission of a cell after a second offset value t2 since the deactivation signaling is recieved.

In an embodiment of the present application, an effective timing means a specific time.

For Case 3, the terminal device can receive an activation signaling in a PCell and/or any SCell, and the activation signaling is used for instructing the network device to activate the cell discontinuous transmission of the current cell or each cell within the cell group where the current cell is located. The terminal device can also receive a deactivation signaling in a PCell and/or any SCell, and the deactivation signaling is used for instructing the network device to deactivate the cell discontinuous transmission of the current cell or each cell within the cell group where the current cell is located. The terminal device can also receive an activation signaling in a PCell and/or any SCell, and the activation signaling is used for instructing the network device to activate the cell discontinuous transmission of at least one cell or cells of at least one cell group. The terminal device can receive a deactivation signaling in a PCell and/or any SCell, and the deactivation signaling is used for instructing the network device to deactivate the cell discontinuous transmission of at least one cell or cells of at least one cell group. In an embodiment, at least one cell or at least one cell group can be preconfigured by the network device, or carried by the activation signaling or the deactivation signaling.

Base on any embodiment of the present application, all time-frequency-space resource locations involved satisfy one or more of the following:
being associated with C-DRX of the terminal device; or
being associated with the cell discontinuous transmission.

In an embodiment, the time-frequency-space resource locations of the activation signaling and the deactivation signaling can also be configured independently.

In an embodiment, the time-frequency-space resource location includes at least one of a time-domain resource location (e.g., a time-domain reception location), a frequency-domain resource location, and a space-domain resource location.

In case that the time-domain reception location of the activation signaling or the deactivation signaling is associated with the C-DRX of the terminal device, one or more of the ways 11 to 14 are included.

Way 11: The time-domain reception location is within a receiving time window in an inactivation period of the C-DRX. The receiving time window is configured by the network device and is located before an activation period of the C-DRX.

For way 11, the terminal device receives the indication signaling only during the inactivation period of the C-DRX.

In an embodiment of the present application, the configuration information of all receiving time windows involved can include one or more of the following:
a start position of the receiving time window;
an end position of the receiving time window;
a duration of the receiving time window;
a period of the receiving time window;
a period for receiving indication signaling;
association relationship between indication signaling and a specific physical signal, where the specific physical signal includes one or more of the following: a power saving signal (DCI with CRC scrambled by PS-RNTI, DCP), a channel state information reference signal (CSI-RS), a synchronization block (Synchronisation signal /PBCH, SSB), a channel state information reference signal for tracking (CSI-RS for tracking, TRS), a phase tracking reference signal (PT-RS), a demodulation reference signal (DMRS), a positioning reference signal (PRS), and the like;
association relationship between indication signaling and a specific transmission channel, where the specific transmission channel includes one or more of the following: a semi-persistent scheduling physical downlink shared channel (SPS PDSCH), a configuration grant uplink shared channel (CG PUSCH), or a dynamic scheduling for retransmission and the like; or
association relationship between an indication signaling and a specific message, where the specific message includes one or more of the following: a random access request, a paging message, a scheduling request, or a data retransmission feedback (HARQ-ACK and/or NACK), and the like.

In an embodiment, in case that the association relationship between the indication signaling and DCP is indicated by the configuration information of the receiving time window, the association relationship can indicate that there is a specific offset between the indication signaling and the DCP, which is used to indicate that the terminal device receives the indication signaling before the DCP, or that the indication signaling is received after the DCP, or that the indication signaling and the DCP are the same signaling, or that the indication signaling is received within the receiving time window of the DCP, and the like.

Way 12: the time-domain reception location is within an inactivation period of the C-DRX.

For way 12, the terminal device receives indication signaling only during the inactivation period of the C-DRX, and the transmission way of the indication signaling during the inactivation period of the C-DRX is semi-persistent. For semi-persistent way, the network device preconfigures, for the terminal device, a period for receiving the indication signaling and an offset value. A receiving time window can also be configured during the inactivation period of the C-DRX, so as to reduce unnecessary detection.

Way 13: the time-domain reception location is within an activation period of the C-DRX.

For way 13, the indication signaling is limited by the C-DRX. The terminal device detects and receives the indication signaling only during the activation period of the C-DRX. For example, a radio network temporary identifier (RNTI) for scrambling the cyclic redundancy check (CRC) of the indication signaling based on the L1 signaling is affected by the C-DRX and can only be detected during the activation period of the C-DRX. In an embodiment, a receiving time window can also be configured during the activation period of the C-DRX, so as to reduce unnecessary detection.

Way 14: the time-domain reception location is within an activation period and an inactivation period of the C-DRX.

For way 14, the indication signaling is not limited by the C-DRX, and the terminal device can receive the indication signaling during the activation period and the inactivation period of the C-DRX. For example, the RNTI for scrambling the CRC of the indication signaling based on the L1 signaling is not limited by the C-DRX. For example, the indication signaling based on the MAC signaling can be carried based on the semi-persistent scheduling physical downlink shared channel (SPS PDSCH). For example, the time-domain reception location preconfigured based on the RRC signaling is associated with the system frame number (SFN) and is not limited by the C-DRX of the terminal.

In an embodiment, the network device can configure a receiving time window during the activation period and the inactivation period of the C-DRX respectively.

In case that the time-domain reception location of the activation signaling and/or the deactivation signaling is associated with the cell discontinuous transmission, one or more of the ways 21 and 22 are included.

Way 21: the time-domain reception location is within a receiving time window before a specific period of the cell discontinuous transmission.

For way 21, in case that the network device (e.g., base station) preconfigures information related to semi-persistent cell discontinuous transmission, the terminal device receives the indication signaling within the receiving time window.

In an embodiment, the specific period of the cell discontinuous transmission can correspond to a specific cell or a specific cell group.

In an embodiment, the specific period of the cell discontinuous transmission can be a period of the cell discontinuous transmission of all cells, or a period of the cell discontinuous transmission of a specific cell, or a period of the cell discontinuous transmission of a specific cell group.

In an embodiment, the activation signaling is used for indicating the activation of the cell discontinuous transmission of the target cell for one or more subsequent periods, or the deactivation signaling is used for indicating the deactivation of the cell discontinuous transmission of the target cell for one or more subsequent periods. The indication signaling is used for indicating one or more of the following:
activation/deactivation of one cell DTX transmission;
activation/deactivation of one cell DRX transmission;
activation/deactivation of multiple cell DTX transmission; or
activation/deactivation of multiple cell DRX transmission.

Way 22: the time-domain reception location has no correlation with the cell discontinuous transmission.

In an embodiment, the activation signaling is used for indicating the activation/deactivation of the cell discontinuous transmission for one or more current or subsequent adjacent periods, or the deactivation signaling is used for indicating the activation/deactivation of the cell discontinuous transmission for one or more current or subsequent adjacent periods. The indication signaling is used for indicating one or more of the following:
activation/deactivation of one cell DTX transmission;
activation/deactivation of one cell DRX transmission;
activation/deactivation of multiple cell DTX transmission; or
activation/deactivation of multiple cell DRX transmission.

In an embodiment, in case that the signaling receiving cell is a Pcell, the activation signaling can be a first signaling, and the target cell can be a first target cell. In an embodiment, in case that the signaling receiving cell is a Scell, the activation signaling can be a second signaling, and the target cell can be a second target cell. In an embodiment, in case that the signaling receiving cell is a Pcell, the deactivation signaling can be a third signaling, and the target cell can be a third target cell. In an embodiment, in case that the signaling receiving cell is a Scell, the deactivation signaling can be a fourth signaling, and the target cell can be a fourth target cell.

In an embodiment, the first signaling and/or the second signaling can be the same signaling or different signalings.

The first signaling and/or the second signaling can be one or more of a L1 signaling, a MAC layer signaling, or an RRC signaling. For example, the first signaling and the second signaling are both a L1 signaling; the first signaling is a L1 signaling and the second signaling is a MAC layer signaling; the first signaling is a L1 signaling and the second signaling is an RRC layer signaling; or the first signaling and/or the second signaling can be associated with a signaling for other purpose.

In an embodiment, the third signaling and the fourth signaling can be the same signaling or different signalings. In an embodiment, the third signaling and /or the fourth signaling can be one or more of a L1 signaling, a MAC layer signaling, or an RRC signaling. For example, the third signaling and the fourth signaling are both L1 signalings; the third signaling is a L1 signaling and the fourth signaling is a MAC layer signaling; the third signaling is a L1 signaling and the fourth signaling is an RRC layer signaling; the third signaling and/or the fourth signaling can be associated with a signaling for other purpose.

In an embodiment, the third signaling and the first signaling can be the same signaling, and the fourth signaling and the second signaling can be different signalings.

In an embodiment, the first target cell and the third target cell can be the same or different.

In an embodiment, the first target cell and the third target cell include one or more of the following:
a PCell, a specific SCell, or at least one cell in a first cell group.

In an embodiment, the first cell group can include all serving cells of the terminal device. The first cell group can be a cell group corresponding to the C-DRX group where the PCell is located, any cell group configured by the network device, a specific SCell group, or a cell group corresponding to a secondary C-DRX group.

In an embodiment, the second target cell and the fourth target cell can be the same or different.

In an embodiment, the second target cell and the fourth target cell include one or more of the following:
a specific SCell, a PCell, or at least one cell in a second cell group.

In an embodiment, the second cell group can include all serving cells of the terminal device. The second cell group can be a DRX group where the SCell is located, or any cell group configured by the network device.

In an embodiment, in case that the first signaling and/or the third signaling are received in the PCell, the first signaling and the third signaling can be the same signaling or different signalings. In an embodiment, in case that the first target cell and the third target cell are the same, the terminal device receives the first signaling and/or the third signaling in the PCell, in one or more of the following ways 31 to 36.

Way 31: in case that the first target cell includes all cells, the terminal device receives the first signaling and/or the third signaling in the PCell, where the first signaling is used for activating the cell discontinuous transmission of all cells, and the third signaling is used for deactivating the cell discontinuous transmission of all cells.

In an embodiment, all cells can be cells in the first cell group.

In an embodiment, the cell discontinuous transmission of all cells is configured with the same cell discontinuous transmission parameter, or different cell discontinuous transmission parameters.

Way 32: In case that the first target cell includes all cells in a cell group where the PCell is located, the terminal device receives the first signaling and/or the third signaling in the PCell, where the first signaling is used for activating the cell discontinuous transmission of all cells in the cell group where the PCell is located, and the third signaling is used for deactivating the cell group where the PCell is located.

In an embodiment, the cell group where the PCell is located can be a cell group preconfigured by the network device, a cell group associated with a C-DRX group where the PCell is located, a cell group associated with a cell DRX group, or a cell group associated with a SCell dormancy group.

Way 33: In case that the first target cell includes all cells in one or more cell groups, the terminal device receives the first signaling and/or the third signaling in the PCell, where the first signaling is used for activating the cell discontinuous transmission of all cells in one or more cell groups, and the third signaling is used for deactivating the cell discontinuous transmission of all cells in one or more cell groups.

In an embodiment, one or more cell groups can be one or more of the following: a cell group configured by the network device, a cell group where the signaling receiving cell is located, a cell group for the cell discontinuous transmission (DTX group and/or DRX group), all cells in a cell group configured by the network device, all cells corresponding to a first C-DRX group, all cells corresponding to a secondary C-DRX group, a cell group dedicatedly configured for NES by the network device, or a cell group associated with a C-DRX group where the PCell is located.

Way 34: In case that the first target cell is a specific cell (e.g., a specific SCell), the terminal device receives the first signaling and/or the third signaling in the PCell, where the first signaling is used for activating the cell discontinuous transmission of the specific cell, and the third signaling is used for deactivating the cell discontinuous transmission of the specific cell, where the information related to the specific cell can be carried by the first signaling and/or the third signaling, or can be indicated by a higher layer signaling or a MAC layer signaling.

Way 35: In case that the first target cell includes all cells in one or more cell groups, the terminal device receives the first signaling and/or the third signaling in the PCell, where the first signaling is used for activating the cell discontinuous transmission of one or more cell groups, and the third signaling is used for deactivating the cell discontinuous transmission of one or more cell groups, where at least one cell indicated by the first signaling and/or the third signaling is preconfigured by the network device. For example, the network device configures a cell list, and the cell list includes, for example, a cell identifier of the above-mentioned at least one cell.

Way 36: In case that the first target cell is a PCell, the terminal device receives the first signaling and/or the third signaling in the PCell, where the first signaling is used for activating the cell discontinuous transmission of the PCell, and the third signaling is used for deactivating the cell discontinuous transmission of the PCell.

In an embodiment, in case that the second signaling and/or the fourth signaling are received in the SCell, the second signaling and the fourth signaling can be the same signaling, or can be different signaling, or can be one or the other. In an embodiment, in case that the second target cell and the fourth target cell are the same, the terminal device receives the second signaling and/or the fourth signaling in the SCell, in one or more of the following ways 41 to 46.

Way 41: In case that the second target cell includes all cells, the terminal device receives the second signaling/fourth signaling in the SCell, where the second signaling is used used for activating the cell discontinuous transmission of all cells, and the fourth signaling is used for deactivating the cell discontinuous transmission of all cells.

In an embodiment, all cells can be cells in the second cell group.

In an embodiment, the cell discontinuous transmission of all cells can be the same cell discontinuous transmission, or can be the cell discontinuous transmission of different cells.

Way 42: In case that the second target cell includes all cells in a cell group where the SCell is located, the terminal device receives the second signaling and/or the fourth signaling in the SCell, where the second signaling is used for activating the cell discontinuous transmission of all cells in the cell group where the SCell is located, and the fourth signaling is used for deactivating the cell group where the SCell is located.

In an embodiment, the cell group where the SCell is located can be a cell group preconfigured by the network device (e.g., base station), a cell group associated with a DRX group where the SCell is located, or a cell group associated with a SCell dormancy group.

Way 43: In case that the second target cell includes all cells in one or more cell groups, the terminal device receives the second signaling and/or the fourth signaling in the SCell, where the second signaling is used for activating the cell discontinuous transmission of all cells in one or more cell groups, and the fourth signaling is used for deactivating the cell discontinuous transmission of all cells in one or more cell groups.

In an embodiment, one or more cell groups can be one or more of the following: a cell group where the signaling receiving cell is located, a cell group for the cell discontinuous transmission (DTX group and/or DRX group), all cells in a cell group configured by the network device, a first C-DRX group, a secondary C-DRX group, a cell group dedicatedly configured for NES by the network device, or a cell group associated with a C-DRX group where the SCell is located.

Way 44: In case that the second target cell is a specific cell (e.g., a PCell, a specific SCell), the terminal device receives the second signaling and/or the fourth signaling in the SCell, where the second signaling is used for activating the cell discontinuous transmission of the specific cell, and the fourth signaling is used for deactivating the cell discontinuous transmission of the specific cell, where the information related to the specific cell can be carried by the second signaling and/or the fourth signaling, or can be indicated by a higher layer signaling or a MAC layer signaling.

Way 45: In case that the second target cell includes all cells in one or more cell groups, the terminal device receives the second signaling and/or the fourth signaling in the SCell, where the second signaling is used for activating the cell discontinuous transmission of one or more cell groups, and the fourth signaling is used for deactivating the cell discontinuous transmission of one or more cell groups, where at least one cell indicated by the second signaling/fourth signaling (a cell included in one or more cell groups) is preconfigured by the base station. For example, the network device configures a cell list, and the cell list includes, for example, a cell identifier of the above-mentioned at least one cell.

Way 46: In case that the second target cell is a current cell (e.g., a SCell), the terminal device receives the second signaling and/or the fourth signaling in the SCell, where the second signaling is used for activating the cell discontinuous transmission of the current cell, and the fourth signaling is used for deactivating the cell discontinuous transmission of the current cell.

For example, for way 02, in case that cells in a same C-DRX group use a common cell discontinuous transmission configuration, the method for activating the cell discontinuous transmission of a PCell and/or a specific SCell includes: the terminal device receiving, in the PCell and/or the specific SCell, an activation signaling based on a L1 signaling (i.e., the first signaling and/or the third signaling) respectively, and the activation signaling being used for indicating activation of the cell discontinuous transmission of a cell group corresponding to the PCell and/or the specific SCell. It is assumed here that the PCell and /or the specific SCell belong to different C-DRX groups. Specific information related to the cell discontinuous transmission is preconfigured by the network device and/or indicated by the L1 signaling. After receiving the activation signaling based on the L1 signaling, the terminal device starts a timer for discontinuous transmission of each cell group, of which the cell discontinuous transmission is activated, where the timer is preconfigured by the network device. In case that the timer times out, the terminal device deactivates the cell discontinuous transmission of the corresponding cell group at a specific time. The specific time can be, for example, 0, meaning that in case that the timer times out, the cell discontinuous transmission of the corresponding cell group is immediately deactivated. The specific time can also be, for example, an offset value, meaning that after the offset value has elapsed since the timer times out, the cell discontinuous transmission of the corresponding cell group is deactivated. The specific time can also be, for example, a specific time slot or subframe, meaning that at a first symbol or a specific symbol of an adjacent time slot or subframe after the timer times out, the cell discontinuous transmission of the corresponding cell group is deactivated.

It should be noted that in case that different cells use different cell discontinuous transmission configurations, the method for activating/deactivating the cell discontinuous transmission of a specific cell is similar to the method for activating the cell discontinuous transmission of a PCell and a specific SCell in case that cells in a same DRX group use a common cell discontinuous transmission configuration, and it will not be repeated here.

For example, for way 04, in case that different cells use different cell discontinuous transmission configurations, the method for activating the cell discontinuous transmission of a PCell and/or a SCell includes:
the terminal device receiving, in the PCell and/or the SCell, an activation signaling based on a L1 signaling (i.e., the first signaling and/or the third signaling) respectively, and the activation signaling being used for activating the cell discontinuous transmission corresponding to the PCell and/or the SCell. It is assumed here that the PCell and the SCell are respectively configured with different information related to the cell discontinuous transmission, and/or indicated by the L1 signaling. After the cell discontinuous transmission corresponding to the PCell and the SCell is activated, semi-persistent transmission can be performed according to the parameters preconfigured by the network device, or transmission during an activation or inactivation period of the cell discontinuous transmission can be performed. In case that there is no data transmission in the SCell, or in case that the network device intends to apply the cell discontinuous transmission to a carrier where the SCell is located, the network device deactivates the SCell through the MAC layer signaling, and meanwhile deactivates the corresponding cell discontinuous transmission, or terminates the transmission during an activation period of the cell discontinuous transmission. Here, the deactivation signaling can also be a deactivation signaling based on MAC layer signaling that dedicated to the cell discontinuous transmission.

For example, for way 05, in case that different cells use different cell discontinuous transmission configurations, the terminal device receives, in a PCell and/or a Scell, an activation signaling based on a MAC signaling (i.e., the first signaling and/or the third signaling) respectively. The MAC signaling is, for example, a MAC control element (MAC CE), and the activation signaling is used for activating the cell discontinuous transmission corresponding to the PCell and/or the SCell. It is assumed here that the PCell and the SCell are respectively configured with different information related to the cell discontinuous transmission, and the related information can be preconfigured by the network device and/or indicated by the L1 signaling. The MAC layer signaling can be an activation signaling dedicated to the cell discontinuous transmission, or can be a MAC signaling multiplexed to activate the SCell. After the cell discontinuous transmission corresponding to the PCell and/or the SCell is activated, semi-persistent transmission can be performed according to the parameters preconfigured by the network device, or transmission during an activation period/inactivation period of the cell discontinuous transmission can be performed. The base station deactivates the corresponding cell discontinuous transmission or terminates the transmission during an activation period of the cell discontinuous transmission, by using the deactivation signaling based on the MAC layer signaling that dedicated to the cell discontinuous transmission, or the MAC layer signaling multiplexed to activate the SCell.

The following is an exemplary description of the terminal device receiving the first signaling ("NES: ACT", indicating that activation indication information is carried, and the activation indication information is used for indicating the activation of the cell discontinuous transmission) in a Pcell for case 1, in combination with FIGS. 4 to 6.

FIG. 4 is a first schematic diagram of receiving signaling according to an embodiment of the present application. As shown in FIG. 4, the terminal device receives the first signaling only during an inactivation period of the C-DRX. For example, the first signaling is received within a specific time window before the inactivation period of the C-DRX (i.e., DRX-ON).

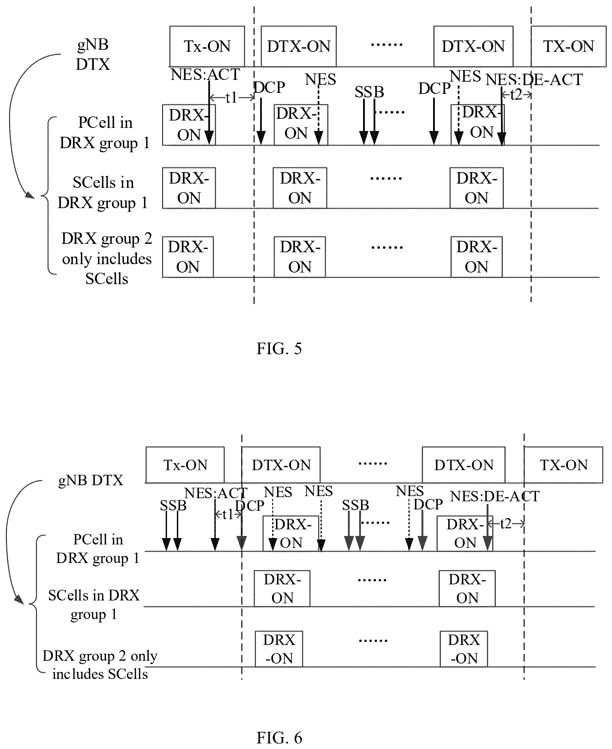

FIG. 5 is a second schematic diagram of receiving signaling according to an embodiment of the present application. As shown in FIG. 5, the terminal device receives the first signaling only during an activation period of the C-DRX. For example, a first signaling based on PDCCH is limited by the C-DRX of the terminal device.

FIG. 6 is a third schematic diagram of receiving signaling according to an embodiment of the present application. As shown in FIG. 6, the first signaling is independent of the C-DRX of the terminal device. That is, the first signaling can not only be received during the inactivation period of the C-DRX, but also be received during the activation period of the C-DRX. For example, the first signaling based on PDCCH is not limited by the C-DRX, or the first signaling is received within a specific time window before the activation or inactivation period of the cell discontinuous transmission, or the first signaling is received according to the time-frequency-space resource location where the first signaling is located and preconfigured by the network device.

The terminal device receives the activation indication information in at least one of the following ways 51 to 53.

Way 51: At an effective timing (i.e., a specific time) after receiving the activation indication information, it is determined that the cell discontinuous transmission is effective. There is an offset value t1 between the effective timing and a timing when the activation indication information is received. When t1=0, it is determined that the cell discontinuous transmission is effective immediately. The t1 can be preconfigured by the network device or carried by the first signaling. According to cell discontinuous transmission parameters preconfigured by the network device, a start position of an activation period/inactivation period of the cell discontinuous transmission is determined. The cell discontinuous transmission parameters include, for example, a period of the cell discontinuous transmission and an offset value of the start position. After the cell discontinuous transmission is activated, the terminal device can perform semi-persistent transmission or a specific number of transmissions, according to the cell discontinuous transmission parameters preconfigured by the network device. The specific number of times transmissions can be, for example, once or N times, where N is an integer greater than 1. The specific number of transmissions is defined by a protocol or configured by the network device.

Way 52: At an effective timing after receiving the activation indication information, it is determined that the cell discontinuous transmission is effective. There is an offset value t1 between the effective timing and a timing when the activation indication information is received. When t1=0, it can be considered that the cell discontinuous transmission is effective immediately. The t1 can be preconfigured by the network device or carried by the first signaling. The effective timing can also be a start position of an activation period/inactivation period of the cell discontinuous transmission. After the cell discontinuous transmission is activated, semi-persistent transmission or a specific number of transmissions is performed according to the cell discontinuous transmission parameters preconfigured by the network device. The specific number of transmissions can be, for example, once or N times, where N is an integer greater than 1. The specific number of transmissions is defined by a protocol or configured by the network device.

Way 53: At an effective timing after receiving the activation indication information, it is determined that the cell discontinuous transmission is effective. There is an offset value t1 between the effective timing and a timing when the activation indication information is received. When t1=0, it can be considered that the cell discontinuous transmission is effective immediately. The t1 can be preconfigured by the network device or carried by the first signaling. The effective timing can also be a start position of an activation period/inactivation period of the cell discontinuous transmission. After the cell discontinuous transmission is activated, transmission is performed according to an activation period/inactivation period of the cell discontinuous transmission preconfigured by the network device.

In case that a Pcell and a Scell use common cell discontinuous transmission, the terminal device receives a third signaling ("NES:DE-ACT" in FIGS. 4 to 6 of the embodiments of the present application) in the Pcell. The third signaling carries deactivation indication information, and the deactivation indication information is used for indicating deactivation of the cell discontinuous transmission.

The terminal device receives the third signaling only during the inactivation period of the C-DRX. For example, the terminal device receives the third signaling within a specific time window before the activation period of the C-DRX. It can be seen in FIG. 4.

The terminal device receives the third signaling only during the activation period of the C-DRX. For example, the third signaling based on PDCCH is limited by the C-DRX of the terminal. It can be seen in FIG. 5.

The third signaling is independent of the C-DRX. For example, the terminal device can receive a third signaling during the activation period of the C-DRX and can receive the third signaling during the inactivation period of the C-DRX. It can be seen in FIG. 6.

For example, the deactivation of the cell discontinuous transmission of a specific cell, a specific cell group, or all cells at a specific time after receiving the deactivation indication information by the terminal device is invalidated. That is, the network device is considered to have resumed its normal transmission and/or reception state. The terminal device deactivates the corresponding cell discontinuous transmission of the specific cell, the specific cell group, or all cells. The deactivation way can be one or more of the above-described ways 31 to 36. The terminal device receives the deactivation indication information in one or more of the following ways 61 to 65.

Way 61: After the terminal receives the deactivation information, the cell discontinuous transmission of a specific cell or a specific cell group is invalidated at a second offset value t2 from a time when the third signaling is received. When t2=0, it can be considered that the cell discontinuous transmission is invalidated immediately. The t2 can be preconfigured by the network device or carried by the third signaling.

Way 62: After receiving the deactivation information, the terminal deactivates the cell discontinuous transmission of a specific cell or a specific cell group from a specific period of the cell discontinuous transmission. In an embodiment, the specific period of the cell discontinuous transmission is one or more of a current period, a next period, or a period of transmission specified by the network device.

Way 63: After receiving the deactivation information, the terminal deactivates the cell discontinuous transmission of a specific cell or a specific cell group at a specific time, and the specific time is associated with a subcarrier spacing of the specific cell.

Way 64: After receiving the deactivation information, the terminal ends a current activation period/inactivation period of the cell discontinuous transmission of a specific cell.

Way 65: After receiving the deactivation information, the terminal deactivates the cell discontinuous transmission or ends an activation or inactivation period of the cell discontinuous transmission, after a certain offset value from the terminal transmitting acknowledgement information.

The following describes receiving a first signaling and/or a third signaling in a Pcell for case 2 and case 3.

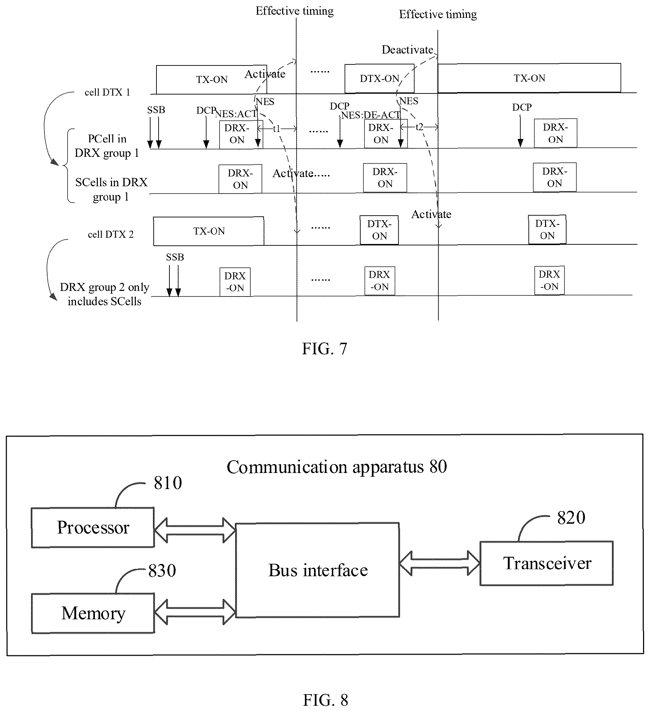

For case 2, the terminal device receives the first signaling and/or the third signaling in a Pcell, the first signaling carries activation indication information of all cells or at least one cell group, and the third signaling carries deactivation indication information of all cells or at least one cell group. For details, reference is made to the embodiment of FIG. 7.

The activation indication information (deactivation information) of a cell included in the first signaling (third signaling) can be indicated in the form of a cell group or indicated individually in the form of a cell. For example, the activation indication information (deactivation information) of all cells in a current cell group can be indicated individually in the form of a cell.

The cell group can be a same C-DRX group where the PCell is located, or can be a cell group dedicatedly configured by the network device. Cells in a same group have corresponding cell discontinuous transmission.

FIG. 7 is a second schematic diagram of activating/deactivating cell discontinuous transmission of different cells or cell groups according to an embodiment of the present application. As shown in FIG. 7, different cell groups are configured with different cell DTXs. For example, the different cell groups include DRX Group 1 and DRX Group 2. DRX group 1 is configured with cell DTX 1, and DRX group 2 is configured with cell DTX 2.

For a PCell in DRX group 1, for example, in case thatthe terminal device receives an activation signaling (NES: ACT) carrying activation indication information during an activation period of the Pcell DTX (DRX-ON), and activates the cell discontinuous transmission after a first offset value t1 since the activation signaling is received. For example, the terminal device receives a deactivation signaling (NES:DE-ACT) carrying deactivation indication information during an activation period of the Pcell DTX (DRX-ON), and deactivates the cell discontinuous transmission after a second offset value t2 since the deactivation signaling is received.

For each SCell in DRX group 2, for example, the terminal device receives an activation signaling (NES: ACT) carrying activation indication information during an activation period of the Pcell DTX (DRX-ON), and activates the cell discontinuous transmission after a first offset value t1 since the activation signaling is received. For example, the terminal device receives a deactivation signaling (NES:DE-ACT) carrying deactivation indication information during an activation period of the Pcell DTX (DRX-ON), and deactivates the cell discontinuous transmission after a second offset value t2 since the deactivation signaling is received.

For case 3, the terminal device receives a first signaling and/or third signaling in a Pcell, the first signaling carries activation indication information of all cells or at least one cell, and the third signaling carries deactivation information of all cells or at least one cell. The first signaling includes activation indication information of all cells, or activation indication information of at least one specific cell. The third signaling includes deactivation indication information of all cells, or deactivation information of the cell discontinuous transmission of at least one specific cell.

In an embodiment, the at least one specific cell includes: a PCell and/or at least one specific SCell.

In an embodiment, for case 2 and case 3, the terminal device can receive the first signaling in at least one of the following ways 71 to 73.

Way 71: The terminal device receives the first signaling only during an inactivation period of a C-DRX group where the PCell is located. For example, the terminal device receives the first signaling within a specific time window before an activation period of the C-DRX, or receives the first signaling within a specific time window during the inactivation period of the C-DRX.

Way 72: The terminal device receives the first signaling only during an activation period of the C-DRX where the PCell is located. For example, the first signaling based on PDCCH is limited by the C-DRX.

Way 73: The terminal device can receive the first signaling during an inactivation period of the C-DRX or during an activation period of the C-DRX, that is, the first signaling is independent of the C-DRX where the PCell of the terminal device is located. For example, the first signaling based on PDCCH is not limited by the C-DRX, or the first signaling is received within a specific time window before the activation period/inactivation period of the cell discontinuous transmission, or the first signaling is received according to the time-frequency-space resource location where the first signaling is located and preconfigured by the network device.

For case 2 and case 3, after the terminal device receives the activation indication information, a specific cell or a specific cell group corresponding to the activation indication information performs corresponding cell discontinuous transmission at a specific time. After the terminal device receives the deactivation indication information, the specific cell or the specific cell group corresponding to the deactivation indication information performs corresponding cell discontinuous transmission at a specific time.

It should be noted that, for example, in case that there is a subcarrier difference between a cell where the first signaling is received and a cell which is indicated for activation of the cell discontinuous transmission, time difference between the two cells needs to be further considered.

For case 2 and case 3, the process of receiving a second signaling and/or a fourth signaling in a SCell is similar to the process of receiving the first signaling and/or the third signaling in a PCell, and it is not repeated here.

In FIG. 3 to 7 of the present application, "SSB" represents a synchronization signal and physical broadcast channel (PBCH) block (SSB). The SSB includes a primary synchronization signal (PSS), a secondary synchronization signal (SECONDARY), and the PBCH. The dashed line "NES" indicates that no activation signaling and/or deactivation signaling is received, and tland t2 can be the same or different.

In an embodiment, configuration parameter configuration information includes one or more of the following:
configuration cell information;
a time-frequency-space resource location of indication signaling; or
a type of indication signaling.

The configuration cell information includes:
configuration only for a PCell, that is, the serving cell index (ServCellIndex) being 0;
configuration for a specific SCell, that is, the serving cell index (ServCellIndex) being a non-zero value;
configuration for any one or more serving cells; and
configuration for a cell associated with a specific carrier.

In case that the indication signaling is the L1 signaling, one or more of the following are configured:
configuration of a search space set where the L1 signaling is located;
a start position of a time window for receiving the a L1 signaling;
an end position of a time window for receiving the a L1 signaling; or
a type of the L1 signaling, such as group common signaling or signaling dedicated to a terminal device.

In case that the indication signaling is MAC layer signaling, one or more of the following are configured: a PDSCH time-frequency resource location where the MAC layer signaling is located, a resource size occupied by activation/deactivation information field, or the like.

In case that the indication signaling is the RRC signaling, a time-domain location, such as one or more of a period, an offset value, a resource size occupied by activation information field, a resource size occupied by deactivation information field, or the like, of the RRC signaling is configured.

It should be noted that the activation signaling and the deactivation signaling received in a same cell, a same cell group, or all cells can be signalings of the same type or signalings of different types. For the same type of signaling, the activation signaling and the deactivation signaling can also be carried by different signalings, respectively. For details, see the above-mentioned ways 01 to 05.

FIG. 8 is a first structural schematic diagram of a communication apparatus according to an embodiment of the present application. As shown in FIG. 8, the communication apparatus 80 includes a memory 830, a transceiver 820, and a processor 810;
where the memory 830 is used for storing a computer program;
the transceiver 820 is used for transmitting and receiving data under the control of the processor 810; and
the processor 810 is used for reading the computer program in the memory 830 and performing following operations:
   receiving, in a signaling receiving cell, an indication signaling transmitted from a network device; and
   determining, based on the indication signaling, that the network device activates or deactivates cell discontinuous transmission of a target cell.

In an embodiment, receiving, in the signaling receiving cell, indication signaling transmitted from the network device includes:
receiving parameter configuration information; and
receiving, in the signaling receiving cell, the indication signaling transmitted from the network device based on the parameter configuration information.

In an embodiment, the parameter configuration information includes one or more of the following:
cell information of the signaling receiving cell;
a type of the indication signaling; or
a time-frequency-space resource location where the terminal device receives the indication signaling.

In an embodiment, the time-frequency-space resource location satisfies one or more of the following:
being associated with connected discontinuous reception (C-DRX) of the terminal device; or
being associated with the cell discontinuous transmission.

In an embodiment, the target cell includes one or more of the following:
the signaling receiving cell;
a specific cell;
all serving cells of the terminal device;
all cells in a cell group where the signaling receiving cell is located, where the cell group is a cell group for cell discontinuous transmission;
all cells in a cell group configured by the network device;
all cells in a first C-DRX group; or
all cells in a secondary C-DRX group.

In an embodiment, the signaling receiving cell includes one or more of the following:
a primary cell; or
a secondary cell.

In an embodiment, determining, based on the indication signaling, that the network device activates or deactivates cell discontinuous transmission of a target cell includes:
determining, based on information indicated by the indication signaling, that the network device activates or deactivates the cell discontinuous transmission of the target cell at a specific time.

In an embodiment, the processor 810 is further used for:
transmitting, to the network device, acknowledgement information corresponding to the indication signaling.

In an embodiment, the specific time is one or more of the following:
a reception timing of the indication signaling;
a timing that is separated from a reception timing of the indication signaling by a given time interval;
a time associated with a subcarrier spacing (SCS);
associated with a transmitting timing of the acknowledgement information corresponding to the indication signaling; or
an expire time of a specific timer configured by a higher layer signaling.

In an embodiment, the acknowledgement information is carried by one or more of the following signaling:
a L1 signaling;
a medium access control (MAC) layer signaling; or
a radio resource control (RRC) layer signaling.

In an embodiment, the acknowledgement information includes one or more of the following:
hybrid automatic repeat request acknowledgement information (HARQ-ACK);
MAC layer acknowledgement information; or
timer information for acknowledgement information feedback.

In an embodiment, the indication signaling is an activation signaling and/or a deactivation signaling.

In an embodiment, the processor is further used for:
in case that the network device activates the cell discontinuous transmission of the target cell, performing the cell discontinuous transmission based on transmission configuration information,
where the transmission configuration information includes one or more of the following:
   a specific period defined by a protocol;
   a time interval configured by the network device; or
   transmission configuration information of the cell discontinuous transmission.

In an embodiment, the activation signaling and/or the deactivation signaling is any of the following:
a L1 signaling;
a MAC layer signaling;
an RRC layer signaling; or
associated with a signaling for other purpose.

In an embodiment, the signaling for other purpose is one or more of the following:
a secondary cell deactivation signaling;
a secondary cell activation signaling;
a cell dormancy indication signaling;
a cell wake-up indication signaling; or
a specific bandwidth part (BWP) switching signaling.

In an embodiment, a radio network temporary identifier (RNTI) for scrambling cyclic redundancy check (CRC) of the L1 signaling is one or more of the following:
an RNTI dedicated to network energy saving;
an RNTI dedicated to cell discontinuous transmission;
a cell RNTI (C-RNTI);
a power saving RNTI (PS-RNTI); or
a configured scheduling RNTI (CS-RNTI).

In an embodiment, the cell discontinuous transmission includes one or more of the following:
cell discontinuous transmission (cell DTX);
cell discontinuous reception (cell DRX);
transmission during an activation period of cell DTX;
transmission during an inactivation period of cell DTX;
transmission during an activation period of cell DRX; or
transmission during an inactivation period of cell DRX.

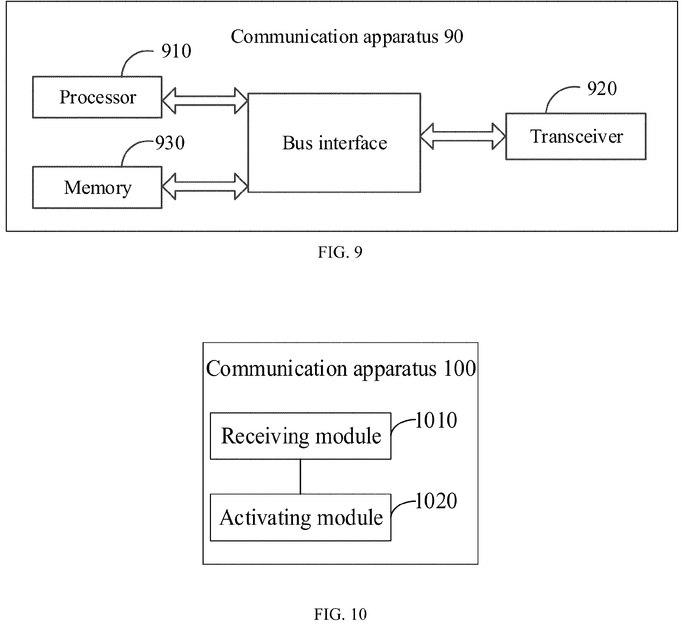

FIG. 9 is a second structural schematic diagram of a communication apparatus according to an embodiment of the present application. As shown in FIG. 9, the communication apparatus 90 includes a memory 930, a transceiver 920, and a processor 910;
where the memory 930 is used for storing a computer program;
the transceiver 920 is used for transmitting and receiving data under control of the processor 910; and
the processor 910 is used for reading the computer program in the memory 930 and performing following operations:
   transmitting, in a signaling receiving cell, an indication signaling to a terminal device, where the indication signaling is used for activating or deactivating cell discontinuous transmission of a target cell; and
   activating or deactivating the cell discontinuous transmission of the target cell.

In an embodiment, the processor is further used for:
transmitting parameter configuration information to the terminal device.

In an embodiment, the parameter configuration information includes one or more of the following:
cell information of the signaling receiving cell;
a type of the indication signaling; or
a time-frequency-space resource location where the terminal device receives the indication signaling.

**In** an embodiment, the time-frequency-space resource location satisfies one or more of the following:
being associated with C-DRX of the terminal device; or
being associated with the cell discontinuous transmission.

**In** an embodiment, the target cell includes one or more of the following:
the signaling receiving cell;
a specific cell;
all serving cells of the terminal device;
all cells in a cell group where the signaling receiving cell is located, where the cell group is a cell group for cell discontinuous transmission;
all cells in a cell group configured by the network device;
all cells in a first C-DRX group; or
all cells in a secondary C-DRX group.

In an embodiment, the signaling receiving cell includes one or more of the following:
a primary cell; or
a secondary cell.

In an embodiment, activating or deactivating the cell discontinuous transmission of the target cell includes:
activating or deactivating the cell discontinuous transmission of the target cell at a specific time.

In an embodiment, the processor is further used for:
receiving acknowledgement information transmitted from the terminal device and corresponding to the indication signaling.

In an embodiment, the specific time is one or more of the following:
a reception timing of the indication signaling;
a timing that is separated from a reception timing of the indication signaling by a given time interval;
a time associated with a subcarrier spacing (SCS);
associated with a transmitting timing of the acknowledgement information corresponding to the indication signaling; or
an expire time of a specific timer configured by a higher layer signaling.

In an embodiment, the acknowledgement information is carried by one or more of the following signaling:
a L1 signaling;
a MAC layer signaling;
an RRC layer signaling.

In an embodiment, the acknowledgement information includes one or more of the following:
HARQ-ACK;
MAC layer acknowledgement information; or
timer information for acknowledgement information feedback.

In an embodiment, the indication signaling is an activation signaling and/or a deactivation signaling.

In an embodiment, the activation signaling and/or the deactivation signaling is any of the following:
a L1 signaling;
a MAC layer signaling;
an RRC layer signaling; or
associated with a signaling for other purpose.

In an embodiment, the signaling for other purpose is one or more of the following:
a secondary cell deactivation signaling;
a secondary cell activation signaling;
a cell dormancy indication signaling;
a cell wake-up indication signaling; or
a specific bandwidth part (BWP) switching signaling.

In an embodiment, an RNTI for scrambling CRC of the L1 signaling is one or more of the following:
an RNTI dedicated to network energy saving;
an RNTI dedicated to cell discontinuous transmission;
a C-RNTI;
a PS-RNTI; or
a CS-RNTI.

In an embodiment, the cell discontinuous transmission includes one or more of the following:
cell DTX;
cell DRX;
transmission during an activation period of cell DTX;
transmission during an inactivation period of cell DTX;
transmission during an activation period of cell DRX; or
transmission during an inactivation period of cell DRX.

FIG. 10 is a third structural schematic diagram of of a communication apparatus according to an embodiment of the present application. As shown in FIG. 10, the communication apparatus 100 is used in a terminal device, and the communication apparatus 100 includes:
a receiving module 1010, used for receiving, in a signaling receiving cell, an indication signaling transmitted from a network device; and
an activating module 1020, used for determining, based on the indication signaling, that the network device activates or deactivates cell discontinuous transmission of a target cell.

In an embodiment, the receiving module 1010 is used for:
receiving parameter configuration information; and
receiving, in the signaling receiving cell, the indication signaling transmitted from the network device based on the parameter configuration information.

In an embodiment, the parameter configuration information includes one or more of the following:
cell information of the signaling receiving cell;
a type of the indication signaling; or
a time-frequency-space resource location where the terminal device receives the indication signaling.

In an embodiment, the time-frequency-space resource location satisfies one or more of the following:
being associated with connected discontinuous reception (C-DRX) of the terminal device; or
being associated with the cell discontinuous transmission.

In an embodiment, the target cell includes one or more of the following:
the signaling receiving cell;
a specific cell;
all serving cells of the terminal device;
all cells in a cell group where the signaling receiving cell is located, where the cell group is a cell group for cell discontinuous transmission;
all cells in a cell group configured by the network device;
all cells in a first C-DRX group; or
all cells in a secondary C-DRX group.

In an embodiment, the signaling receiving cell includes one or more of the following:
a primary cell; or
a secondary cell.

In an embodiment, the activating module 1020 is used for:
determining, based on information indicated by the indication signaling, that the network device activates or deactivates the cell discontinuous transmission of the target cell at a specific time.

In an embodiment, the communication apparatus further includes a transmitting module, where the transmitting module is used for transmitting, to the network device, acknowledgement information corresponding to the indication signaling.

In an embodiment, the specific time is one or more of the following:
a reception timing of the indication signaling;
a timing that is separated from a reception timing of the indication signaling by a given time interval;
a time associated with a subcarrier spacing (SCS);
associated with a transmitting timing of the acknowledgement information corresponding to the indication signaling; or
an expire time of a specific timer configured by a higher layer signaling.

In an embodiment, the acknowledgement information is carried by one or more of the following signaling:
a L1 signaling;
a medium access control (MAC) layer signaling; or
a radio resource control (RRC) layer signaling.

In an embodiment, the acknowledgement information includes one or more of the following:
hybrid automatic repeat request acknowledgement information (HARQ-ACK);
MAC layer acknowledgement information; or
timer information for acknowledgement information feedback.

In an embodiment, the indication signaling is an activation signaling and/or a deactivation signaling.

In an embodiment, the communication apparatus further includes a transmission module;
where the transmission module is used for, in case that the network device activates the cell discontinuous transmission of the target cell, performing the cell discontinuous transmission based on transmission configuration information,
where the transmission configuration information includes one or more of the following:
   a specific period defined by a protocol;
   a time interval configured by the network device; or
   transmission configuration information of the cell discontinuous transmission.

In an embodiment, the activation signaling and/or the deactivation signaling is any of the following:
a L1 signaling;
a MAC layer signaling;
an RRC layer signaling; or
associated with a signaling for other purpose.

In an embodiment, the signaling for other purpose is one or more of the following:
a secondary cell deactivation signaling;
a secondary cell activation signaling;
a cell dormancy indication signaling;
a cell wake-up indication signaling; or
a specific bandwidth part (BWP) switching signaling.

In an embodiment, a radio network temporary identifier (RNTI) for scrambling cyclic redundancy check (CRC) of the L1 signaling is one or more of the following:
an RNTI dedicated to network energy saving;
an RNTI dedicated to cell discontinuous transmission;
a cell RNTI (C-RNTI);
a power saving RNTI (PS-RNTI); or
a configured scheduling RNTI (CS-RNTI).

In an embodiment, the cell discontinuous transmission includes one or more of the following:
cell discontinuous transmission (cell DTX);
cell discontinuous reception (cell DRX);
transmission during an activation period of cell DTX;
transmission during an inactivation period of cell DTX;
transmission during an activation period of cell DRX; or
transmission during an inactivation period of cell DRX.

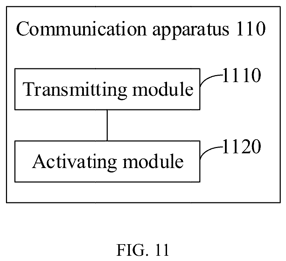

FIG. 11 is a fourth structural schematic diagram of a communication apparatus according to an embodiment of the present application. As shown in FIG. 11, the communication apparatus 110 is use in a network device, and the communication apparatus 110 includes:
a transmitting module 1110, used for transmitting, in a signaling receiving cell, an indication signaling to a terminal device, where the indication signaling is used for activating or deactivating cell discontinuous transmission of a target cell; and
an activating module 1120, used for activating or deactivating the cell discontinuous transmission of the target cell.

In an embodiment, the transmitting module 1110 is further used for transmitting parameter configuration information to the terminal device.

In an embodiment, the parameter configuration information includes one or more of the following:
cell information of the signaling receiving cell;
a type of the indication signaling; or
a time-frequency-space resource location where the terminal device receives the indication signaling.

In an embodiment, the time-frequency-space resource location satisfies one or more of the following:
being associated with C-DRX of the terminal device; or
being associated with the cell discontinuous transmission.

In an embodiment, the target cell includes one or more of the following:
the signaling receiving cell;
a specific cell;
all serving cells of the terminal device;
all cells in a cell group where the signaling receiving cell is located, where the cell group is a cell group for cell discontinuous transmission;
all cells in a cell group configured by the network device;
all cells in a first C-DRX group; or
all cells in a secondary C-DRX group.

In an embodiment, the signaling receiving cell includes one or more of the following:
a primary cell; or
a secondary cell.

In an embodiment, the activating module 1120 is used for:
activating or deactivating the cell discontinuous transmission of the target cell at a specific time.

In an embodiment, the communication apparatus further includes a receiving module;
where the receiving module is used for receiving acknowledgement information transmitted from the terminal device and corresponding to the indication signaling.

In an embodiment, the specific time is one or more of the following:
a reception timing of the indication signaling;
a timing that is separated from a reception timing of the indication signaling by a given time interval;
a time associated with a subcarrier spacing (SCS);
associated with a transmitting timing of the acknowledgement information corresponding to the indication signaling; or
an expire time of a specific timer configured by a higher layer signaling.

In an embodiment, the acknowledgement information is carried by one or more of the following signaling:
a L1 signaling;
a MAC layer signaling; or
an RRC layer signaling.

In an embodiment, the acknowledgement information includes one or more of the following:
HARQ-ACK;
MAC layer acknowledgement information; or
timer information for acknowledgement information feedback.

In an embodiment, the indication signaling is an activation signaling and/or a deactivation signaling.

In an embodiment, the activation signaling and/or the deactivation signaling is any of the following:
a L1 signaling;
a MAC layer signaling;
an RRC layer signaling;
associated with a signaling for other purpose.

In an embodiment, the signaling for other purpose is one or more of the following:
a secondary cell deactivation signaling;
a secondary cell activation signaling;
a cell dormancy indication signaling;
a cell wake-up indication signaling; or
a specific bandwidth part (BWP) switching signaling.

In an embodiment, an RNTI for scrambling CRC of the L1 signaling is one or more of the following:
an RNTI dedicated to network energy saving;
an RNTI dedicated to cell discontinuous transmission;
a C-RNTI;
a PS-RNTI; or
a CS-RNTI.

In an embodiment, the cell discontinuous transmission includes one or more of the following:
cell DTX;
cell DRX;
transmission during an activation period of cell DTX;
transmission during an inactivation period of cell DTX;
transmission during an activation period of cell DRX; or
transmission during an inactivation period of cell DRX.

It should be noted that the division of modules in the embodiments of the present application is illustrative and merely represents a logical functional division. In actual implementation, other division ways can be employed. Furthermore, the functional modules in various embodiments of the present application can be integrated into a single processing module, or each module can exist physically as a separate module, or two or more modules can be integrated into a single module. The aforementioned integrated modules can be implemented in the form of either hardware or software functional modules.

If the integrated module is implemented in the form of a software functional module and sold or used as an independent product, it can be stored in a processor-readable storage medium. Based on this understanding, the solution of the present application, or the part that contributes to the related art, or all or part of the solution can be embodied in the form of a software product. The computer software product is stored in a storage medium and includes several instructions for enabling a computer device (which can be a personal computer, a server, or a network device, and the like.) or a processor to execute all or part of the steps of the method described in each embodiment of the present application. The aforementioned storage medium includes a USB flash drive, a mobile hard disk, a read-only memory (ROM), a random access memory (RAM), a disk or optical disk, and other media that can store program codes.

It should be noted here that the above-mentioned apparatus provided by the embodiments of the present application can implement all the method steps implemented by the above-mentioned method embodiments and can achieve the same technical effects. The parts and beneficial effects that are the same as the method embodiment in the embodiments will not be described in detail here.

An embodiment of the present application also provides a processor-readable storage medium, which stores a computer program. The computer program is used to enable a processor to execute the communication method at the terminal device side in the above-mentioned embodiments, including: receiving, in a signaling receiving cell, an indication signaling transmitted from a network device; and determining, based on the indication signaling, that the network device activates or deactivates cell discontinuous transmission of a target cell.

An embodiment of the present application also provides a processor-readable storage medium, which stores a computer program. The computer program is used to enable a processor to execute the communication method at the network device side in the above-mentioned embodiments, including: transmitting, in a signaling receiving cell, an indication signaling to a terminal device, where the indication signaling is used for activating or deactivating cell discontinuous transmission of a target cell; and activating or deactivating the cell discontinuous transmission of the target cell.

The processor-readable storage medium can be any available medium or data storage device that can be accessed by the processor, including but not limited to a disk memory (such as a floppy disk, a hard disk, a magnetic tape, a magneto-optical disk (MO), and the like.), an optical memory (such as a CD, a DVD, a BD, a HVD, and the like.), and semiconductor memory (such as a ROM, a EPROM, a EEPROM, a non-volatile memory (NAND FLASH),and a solid-state drives (SSD)), and the like.

Those skilled in the art will appreciate that the embodiments of the present application can be provided as methods, systems, or computer program products. Thus, the present application can take the form of an entirely hardware embodiment, an entirely software embodiment, or an embodiment combining software and hardware. Furthermore, the present application can take the form of a computer program product implemented on one or more computer-usable storage media (including but not limited to a disk memory, an optical memory and the like) containing computer-usable program code.

The present application is described with reference to flowcharts and/or block diagrams of methods, devices (systems), and computer program products according to the embodiments of the present application. It should be understood that each process and/or block in the flowcharts and/or block diagrams, as well as combinations of the process and/or block in the flowcharts and/or block diagrams, can be implemented by computer-executable instructions. These computer-executable instructions can be provided to a processor of a general-purpose computer, a special-purpose computer, an embedded processor, or other programmable data processing device to produce a machine, such that the instructions executed by the processor of the computer or other programmable data processing device produce an apparatus for implementing the functions specified in one or more processes in the flowcharts and/or one or more blocks in the block diagrams.

These processor-executable instructions can also be stored in a processor-readable memory that can direct a computer or other programmable data processing device to operate in a specific manner, such that the instructions stored in the processor-readable memory produce a product including an instruction apparatus that implements the functions specified in one or more processes in the flowcharts and/or one or more blocks in the block diagrams.

These processor-executable instructions can also be loaded onto a computer or other programmable data processing device, so that a series of operational steps are executed on the computer or other programmable device to produce a computer-implemented process, whereby the instructions executed on the computer or other programmable device provide steps for implementing the functions specified in one or more processes in the flowcharts and/or one or more blocks in the block diagrams.

It will be apparent that those skilled in the art can make various modifications and variations to the present application without departing from the spirit and scope of the present application. Thus, the present disclosure is intended to encompass such modifications and variations as fall within the scope of the claims and their equivalents.

## Claims

1. A communication method, performed by a terminal device, comprising:
receiving, in a signaling receiving cell, an indication signaling transmitted from a network device; and
determining, based on the indication signaling, that the network device activates or deactivates cell discontinuous transmission of a target cell.

2. The method of claim 1, wherein receiving, in the signaling receiving cell, the indication signaling transmitted from the network device comprises:
receiving parameter configuration information; and
receiving, in the signaling receiving cell, the indication signaling transmitted from the network device based on the parameter configuration information.

3. The method of claim 2, wherein the parameter configuration information comprises one or more of following:
cell information of the signaling receiving cell;
a type of the indication signaling; or
a time-frequency-space resource location where the terminal device receives the indication signaling.

4. The method of claim 2 or 3, wherein the parameter configuration information is obtained through one or more of configuration via higher layer signaling, definition by protocol, or indication in signaling.

5. The method of claim 3, wherein the time-frequency-space resource location satisfies one or more of following:
being associated with connected discontinuous reception, C-DRX, of the terminal device; or
being associated with the cell discontinuous transmission.

6. The method of claim 3 or 5, wherein the time-frequency-space resource location comprises at least one of a time-domain reception location, a frequency-domain resource location, or a space-domain resource location.

7. The method of claim 6, wherein the time-domain reception location is within an activation period of connected discontinuous reception, C-DRX.

8. The method of any of claims 1 to 7, wherein the target cell comprises one or more of following:
the signaling receiving cell;
a specific cell;
all serving cells of the terminal device;
all cells in a cell group where the signaling receiving cell is located, wherein the cell group is a cell group for cell discontinuous transmission;
all cells in a cell group configured by the network device;
all cells in a first connected discontinuous reception, C-DRX, group; or
all cells in a secondary connected discontinuous reception, C-DRX, group.

9. The method of claim 8, wherein the specific cell comprises a primary cell, PCell, and/or a secondary cell, SCell.

10. The method of any of claims 1 to 9, wherein the signaling receiving cell comprises one or more of following:
a primary cell; or
a secondary cell.

11. The method of any of claims 1 to 10, wherein determining, based on the indication signaling, that the network device activates or deactivates the cell discontinuous transmission of the target cell comprises:
determining, based on information indicated by the indication signaling, that the network device activates or deactivates the cell discontinuous transmission of the target cell at a specific time.

12. The method of any of claims 1 to 11, further comprising:
transmitting, to the network device, acknowledgement information corresponding to the indication signaling.

13. The method of claim 12, wherein a specific time is one or more of following:
a reception timing of the indication signaling;
a timing that is separated from a reception timing of the indication signaling by a given time interval;
a time associated with a subcarrier spacing, SCS;
associated with a transmitting timing of the acknowledgement information corresponding to the indication signaling; or
an expire time of a specific timer configured by a higher layer signaling.

14. The method of claim 12, wherein the acknowledgement information is carried by one or more of following signaling:
a L1 signaling;
a medium access control, MAC, layer signaling; or
a radio resource control, RRC, layer signaling.

15. The method of claim 12, wherein the acknowledgement information comprises one or more of following:
hybrid automatic repeat request acknowledgement information, HARQ-ACK;
medium access control, MAC, layer acknowledgement information; or
timer information for acknowledgement information feedback.

16. The method of any of claims 1 to 15, wherein the indication signaling is an activation signaling and/or a deactivation signaling.

17. The method of any of claims 1 to 16, further comprising:
in case that the network device activates the cell discontinuous transmission of the target cell, performing the cell discontinuous transmission based on transmission configuration information,
wherein the transmission configuration information comprises one or more of following:
a specific period defined by a protocol;
a time interval configured by the network device; or
transmission configuration information of the cell discontinuous transmission.

18. The method of claim 16, wherein the activation signaling and/or the deactivation signaling is any of following:
a L1 signaling;
a medium access control, MAC, layer signaling;
a radio resource control, RRC, layer signaling; or
associated with a signaling for other purpose.

19. The method of claim 18, wherein the signaling for other purpose is one or more of following:
a secondary cell deactivation signaling;
a secondary cell activation signaling;
a cell dormancy indication signaling;
a cell wake-up indication signaling; or
a specific bandwidth part, BWP, switching signaling.

20. The method of claim 18, wherein a radio network temporary identifier, RNTI, for scrambling cyclic redundancy check, CRC, of the L1 signaling is one or more of following:
an RNTI dedicated to network energy saving;
an RNTI dedicated to cell discontinuous transmission;
a cell RNTI, C-RNTI;
a power saving RNTI, PS-RNTI; or
a configured scheduling RNTI, CS-RNTI.

21. The method of any of claims 1 to 20, wherein the cell discontinuous transmission comprises one or more of following:
cell discontinuous transmission, cell DTX;
cell discontinuous reception, cell DRX;
transmission during an activation period of cell DTX;
transmission during an inactivation period of cell DTX;
transmission during an activation period of cell DRX; or
transmission during an inactivation period of cell DRX.

22. A communication method, performed by a network device, comprising:
transmitting, in a signaling receiving cell, an indication signaling to a terminal device, wherein the indication signaling is used for activating or deactivating cell discontinuous transmission of a target cell; and
activating or deactivating the cell discontinuous transmission of the target cell.

23. The method of claim 22, further comprising:
transmitting parameter configuration information to the terminal device.

24. The method of claim 23, wherein the parameter configuration information comprises one or more of following:
cell information of the signaling receiving cell;
a type of the indication signaling; or
a time-frequency-space resource location where the terminal device receives the indication signaling.

25. The method of claim 23 or 24, wherein the parameter configuration information is obtained through one or more of configuration via higher layer signaling, definition by protocol, or indication in signaling.

26. The method of claim 24, wherein the time-frequency-space resource location satisfies one or more of following:
being associated with connected discontinuous reception, C-DRX, of the terminal device; or
being associated with the cell discontinuous transmission.

27. The method of claim 24 or 26, wherein the time-frequency-space resource location comprises at least one of a time-domain reception location, a frequency-domain resource location, or a space-domain resource location.

28. The method of claim 27, wherein the time-domain reception location is within an activation period of connected discontinuous reception, C-DRX.

29. The method of any of claims 22 to 28, wherein the target cell comprises one or more of following:
the signaling receiving cell;
a specific cell;
all serving cells of the terminal device;
all cells in a cell group where the signaling receiving cell is located, wherein the cell group is a cell group for cell discontinuous transmission;
all cells in a cell group configured by the network device;
all cells in a first connected discontinuous reception, C-DRX, group; or
all cells in a secondary connected discontinuous reception, C-DRX, group.

30. The method of claim 29, wherein the specific cell comprises a primary cell, PCell, and/or a secondary cell, SCell.

31. The method of any of claims 22 to 30, wherein the signaling receiving cell comprises one or more of following:
a primary cell; or
a secondary cell.

32. The method of any of claims 22 to 31, wherein activating or deactivating the cell discontinuous transmission of the target cell comprises:
activating or deactivating the cell discontinuous transmission of the target cell at a specific time.

33. The method of any of claims 22 to 32, further comprising:
receiving acknowledgement information transmitted from the terminal device and corresponding to the indication signaling.

34. The method of claim 32, wherein a specific time is one or more of following:
a reception timing of the indication signaling;
a timing that is separated from a reception timing of the indication signaling by a given time interval;
a time associated with a subcarrier spacing, SCS;
associated with a transmitting timing of the acknowledgement information corresponding to the indication signaling; or
an expire time of a specific timer configured by a higher layer signaling.

35. The method of claim 33, wherein the acknowledgement information is carried by one or more of following signaling:
a L1 signaling;
a medium access control, MAC, layer signaling; or
a radio resource control, RRC, layer signaling.

36. The method of claim 33, wherein the acknowledgement information comprises one or more of following:
hybrid automatic repeat request acknowledgement information, HARQ-ACK;
medium access control, MAC, layer acknowledgement information; or
timer information for acknowledgement information feedback.

37. The method of any of claims 22 to 36, wherein the indication signaling is an activation signaling and/or a deactivation signaling.

38. The method of claim 37, wherein the activation signaling and/or the deactivation signaling is any of following:
a L1 signaling;
a medium access control, MAC, layer signaling;
a radio resource control, RRC, layer signaling; or
associated with a signaling for other purpose.

39. The method of claim 38, wherein the signaling for other purpose is one or more of following:
a secondary cell deactivation signaling;
a secondary cell activation signaling;
a cell dormancy indication signaling;
a cell wake-up indication signaling; or
a specific bandwidth part, BWP, switching signaling.

40. The method of claim 38, wherein a radio network temporary identifier, RNTI, for scrambling cyclic redundancy check, CRC, of the L1 signaling is one or more of following:
an RNTI dedicated to network energy saving;
an RNTI dedicated to cell discontinuous transmission;
a cell RNTI, C-RNTI;
a power saving RNTI, PS-RNTI; or
a configured scheduling RNTI, CS-RNTI.

41. The method of any of claims 22 to 40, wherein the cell discontinuous transmission comprises one or more of following:
cell discontinuous transmission, cell DTX;
cell discontinuous reception, cell DRX;
transmission during an activation period of cell DTX;
transmission during an inactivation period of cell DTX;
transmission during an activation period of cell DRX; or
transmission during an inactivation period of cell DRX.

42. A communication apparatus, comprising a memory, a transceiver, and a processor,
wherein the memory is used for storing a computer program;
the transceiver is used for transmitting and receiving data under control of the processor; and
the processor is used for reading the computer program in the memory and performing following operations:
receiving, in a signaling receiving cell, an indication signaling transmitted from a network device; and
determining, based on the indication signaling, that the network device activates or deactivates cell discontinuous transmission of a target cell.

43. The communication apparatus of claim 42, wherein receiving, in the signaling receiving cell, the indication signaling transmitted from the network device comprises:
receiving parameter configuration information; and
receiving, in the signaling receiving cell, the indication signaling transmitted from the network device based on the parameter configuration information.

44. The communication apparatus of claim 43, wherein the parameter configuration information comprises one or more of following:
cell information of the signaling receiving cell;
a type of the indication signaling; or
a time-frequency-space resource location where the terminal device receives the indication signaling.

45. The communication apparatus of claim 43 or 44, wherein the parameter configuration information is obtained through one or more of configuration via higher layer signaling, definition by protocol, or indication in signaling.

46. The communication apparatus of claim 44, wherein the time-frequency-space resource location satisfies one or more of following:
being associated with connected discontinuous reception, C-DRX, of the terminal device; or
being associated with the cell discontinuous transmission.

47. The communication apparatus of claim 44 or 46, wherein the time-frequency-space resource location comprises at least one of a time-domain reception location, a frequency-domain resource location, or a space-domain resource location.

48. The communication apparatus of claim 47, wherein the time-domain reception location is within an activation period of connected discontinuous reception, C-DRX.

49. The communication apparatus of any of claims 42 to 48, wherein the target cell comprises one or more of following:
the signaling receiving cell;
a specific cell;
all serving cells of the terminal device;
all cells in a cell group where the signaling receiving cell is located, wherein the cell group is a cell group for cell discontinuous transmission;
all cells in a cell group configured by the network device;
all cells in a first connected discontinuous reception, C-DRX, group; or
all cells in a secondary connected discontinuous reception, C-DRX, group.

50. The communication apparatus of claim 52, wherein the specific cell comprises a primary cell, PCell, and/or a secondary cell, SCell.

51. The communication apparatus of any of claims 42 to 50, wherein the signaling receiving cell comprises one or more of following:
a primary cell; or
a secondary cell.

52. The communication apparatus of any of claims 42 to 51, wherein determining, based on the indication signaling, that the network device activates or deactivates cell discontinuous transmission of a target cell comprises:
determining, based on information indicated by the indication signaling, that the network device activates or deactivates the cell discontinuous transmission of the target cell at a specific time.

53. The communication apparatus of any of claims 42 to 52, wherein the processor is further used for:
transmitting, to the network device, acknowledgement information corresponding to the indication signaling.

54. The communication apparatus of claim 52, wherein a specific time is one or more of following:
a reception timing of the indication signaling;
a timing that is separated from a reception timing of the indication signaling by a given time interval;
a time associated with a subcarrier spacing, SCS;
associated with a transmitting timing of the acknowledgement information corresponding to the indication signaling; or
an expire time of a specific timer configured by a higher layer signaling.

55. The communication apparatus of claim 53, wherein the acknowledgement information is carried by one or more of following signaling:
a L1 signaling;
a medium access control, MAC, layer signaling; or
a radio resource control, RRC, layer signaling.

56. The communication apparatus of claim 53, wherein the acknowledgement information comprises one or more of following:
hybrid automatic repeat request acknowledgement information, HARQ-ACK;
medium access control, MAC, layer acknowledgement information; or
timer information for acknowledgement information feedback.

57. The communication apparatus of any of claims 42 to 56, wherein the indication signaling is an activation signaling and/or a deactivation signaling.

58. The communication apparatus of any of claims 42 to 57, wherein the processor is further used for:
in case that the network device activates the cell discontinuous transmission of the target cell, performing the cell discontinuous transmission based on transmission configuration information,
wherein the transmission configuration information comprises one or more of following:
a specific period defined by a protocol;
a time interval configured by the network device; or
transmission configuration information of the cell discontinuous transmission.

59. The communication apparatus of claim 57, wherein the activation signaling and/or the deactivation signaling is any of following:
a L1 signaling;
a medium access control, MAC, layer signaling;
a radio resource control, RRC, layer signaling; or
associated with a signaling for other purpose.

60. The communication apparatus of claim 59, wherein the signaling for other purpose is one or more of following:
a secondary cell deactivation signaling;
a secondary cell activation signaling;
a cell dormancy indication signaling;
a cell wake-up indication signaling; or
a specific bandwidth part, BWP, switching signaling.

61. The communication apparatus of claim 59, wherein a radio network temporary identifier, RNTI, for scrambling cyclic redundancy check, CRC, of the L1 signaling is one or more of following:
an RNTI dedicated to network energy saving;
an RNTI dedicated to cell discontinuous transmission;
a cell RNTI, C-RNTI;
a power saving RNTI, PS-RNTI; or
a configured scheduling RNTI, CS-RNTI.

62. The communication apparatus of any of claims 42 to 61, wherein the cell discontinuous transmission comprises one or more of following:
cell discontinuous transmission, cell DTX;
cell discontinuous reception, cell DRX;
transmission during an activation period of cell DTX;
transmission during an inactivation period of cell DTX;
transmission during an activation period of cell DRX; or
transmission during an inactivation period of cell DRX.

63. A communication apparatus, comprising a memory, a transceiver, and a processor,
wherein the memory is used for storing a computer program;
the transceiver is used for transmitting and receiving data under control of the processor; and
the processor is used for reading the computer program in the memory and performing following operations:
transmitting, in a signaling receiving cell, an indication signaling to a terminal device, wherein the indication signaling is used for activating or deactivating cell discontinuous transmission of a target cell; and
activating or deactivating the cell discontinuous transmission of the target cell.

64. The communication apparatus of claim 63, wherein the processor is further used for:
transmitting parameter configuration information to the terminal device.

65. The communication apparatus of claim 64, wherein the parameter configuration information comprises one or more of following:
cell information of the signaling receiving cell;
a type of the indication signaling; or
a time-frequency-space resource location where the terminal device receives the indication signaling.

66. The communication apparatus of claim 64 or 65, wherein the parameter configuration information is obtained through one or more of configuration via higher layer signaling, definition by protocol, or indication in signaling.

67. The communication apparatus of claim 65, wherein the time-frequency-space resource location satisfies one or more of following:
being associated with connected discontinuous reception, C-DRX, of the terminal device; or
being associated with the cell discontinuous transmission.

68. The communication apparatus of claim 65 or 67, wherein the time-frequency-space resource location comprises at least one of a time-domain reception location, a frequency-domain resource location, or a space-domain resource location.

69. The communication apparatus of claim 68, wherein the time-domain reception location is within an activation period of connected discontinuous reception, C-DRX.

70. The communication apparatus of any of claims 63 to 69, wherein the target cell comprises one or more of following:
the signaling receiving cell;
a specific cell;
all serving cells of the terminal device;
all cells in a cell group where the signaling receiving cell is located, wherein the cell group is a cell group for cell discontinuous transmission;
all cells in a cell group configured by a network device;
all cells in a first connected discontinuous reception, C-DRX, group; or
all cells in a secondary connected discontinuous reception, C-DRX, group.

71. The communication apparatus of claim 70, wherein the specific cell comprises a primary cell, PCell, and/or a secondary cell, SCell.

72. The communication apparatus of any of claims 63 to 71, wherein the signaling receiving cell comprises one or more of following:
a primary cell; or
a secondary cell.

73. The communication apparatus of any of claims 63 to 72, wherein activating or deactivating the cell discontinuous transmission of the target cell comprises:
activating or deactivating the cell discontinuous transmission of the target cell at a specific time.

74. The communication apparatus of any of claims 63 to 73, wherein the processor is further used for:
receiving acknowledgement information transmitted from the terminal device and corresponding to the indication signaling.

75. The communication apparatus of claim 73, wherein a specific time is one or more of following:
a reception timing of the indication signaling;
a timing that is separated from a reception timing of the indication signaling by a given time interval;
a time associated with a subcarrier spacing, SCS;
associated with a transmitting timing of the acknowledgement information corresponding to the indication signaling; or
an expire time of a specific timer configured by a higher layer signaling.

76. The communication apparatus of claim 74, wherein the acknowledgement information is carried by one or more of following signaling:
a L1 signaling;
a medium access control, MAC, layer signaling; or
a radio resource control, RRC, layer signaling.

77. The communication apparatus of claim 74, wherein the acknowledgement information comprises one or more of following:
hybrid automatic repeat request acknowledgement information, HARQ-ACK;
medium access control, MAC, layer acknowledgement information; or
timer information for acknowledgement information feedback.

78. The communication apparatus of any of claims 63 to 77, wherein the indication signaling is an activation signaling and/or a deactivation signaling.

79. The communication apparatus of claim 78, wherein the activation signaling and/or the deactivation signaling is any of following:
a L1 signaling;
a medium access control, MAC, layer signaling;
a radio resource control, RRC, layer signaling; or
associated with a signaling for other purpose.

80. The communication apparatus of claim 79, wherein the signaling for other purpose is one or more of following:
a secondary cell deactivation signaling;
a secondary cell activation signaling;
a cell dormancy indication signaling;
a cell wake-up indication signaling; or
a specific bandwidth part, BWP, switching signaling.

81. The communication apparatus of claim 79, wherein a radio network temporary identifier, RNTI, for scrambling cyclic redundancy check, CRC, of the L1 signaling is one or more of following:
an RNTI dedicated to network energy saving;
an RNTI dedicated to cell discontinuous transmission;
a cell RNTI, C-RNTI;
a power saving RNTI, PS-RNTI; or
a configured scheduling RNTI, CS-RNTI.

82. The communication apparatus of any of claims 63 to 81, wherein the cell discontinuous transmission comprises one or more of following:
cell discontinuous transmission, cell DTX;
cell discontinuous reception, cell DRX;
transmission during an activation period of cell DTX;
transmission during an inactivation period of cell DTX;
transmission during an activation period of cell DRX; or
transmission during an inactivation period of cell DRX.

83. A communication apparatus, used in a terminal device, comprising:
a receiving module, used for receiving, in a signaling receiving cell, an indication signaling transmitted from a network device; and
an activating module, used for determining, based on the indication signaling, that the network device activates or deactivates cell discontinuous transmission of a target cell.

84. The communication apparatus of claim 83, wherein the receiving module is used for:
receiving parameter configuration information; and
receiving, in the signaling receiving cell, the indication signaling transmitted from the network device based on the parameter configuration information.

85. The communication apparatus of claim 84, wherein the parameter configuration information comprises one or more of following:
cell information of the signaling receiving cell;
a type of the indication signaling; or
a time-frequency-space resource location where the terminal device receives the indication signaling.

86. The communication apparatus of claim 84 or 85, wherein the parameter configuration information is obtained through one or more of configuration via higher layer signaling, definition by protocol, or indication in signaling.

87. The communication apparatus of claim 85, wherein the time-frequency-space resource location satisfies one or more of following:
being associated with connected discontinuous reception, C-DRX, of the terminal device; or
being associated with the cell discontinuous transmission.

88. The communication apparatus of claim 85 or 87, wherein the time-frequency-space resource location comprises at least one of a time-domain reception location, a frequency-domain resource location, or a space-domain resource location.

89. The communication apparatus of claim 88, wherein the time-domain reception location is within an activation period of connected discontinuous reception, C-DRX.

90. The communication apparatus of any of claims 83 to 89, wherein the target cell comprises one or more of following:
the signaling receiving cell;
a specific cell;
all serving cells of the terminal device;
all cells in a cell group where the signaling receiving cell is located, wherein the cell group is a cell group for cell discontinuous transmission;
all cells in a cell group configured by the network device;
all cells in a first connected discontinuous reception, C-DRX, group; or
all cells in a secondary connected discontinuous reception, C-DRX, group.

91. The communication apparatus of claim 90, wherein the specific cell comprises a primary cell, PCell, and/or a secondary cell, SCell.

92. The communication apparatus of any of claims 83 to 91, wherein the signaling receiving cell comprises one or more of following:
a primary cell; or
a secondary cell.

93. The communication apparatus of any of claims 83 to 92, wherein the activating module is used for:
determining, based on information indicated by the indication signaling, that the network device activates or deactivates the cell discontinuous transmission of the target cell at a specific time.

94. The communication apparatus of any of claims 83 to 93, wherein the communication apparatus further comprises a transmitting module,
wherein the transmitting module is used for transmitting, to the network device, acknowledgement information corresponding to the indication signaling.

95. The communication apparatus of claim 92, wherein a specific time is one or more of following:
a reception timing of the indication signaling;
a timing that is separated from a reception timing of the indication signaling by a given time interval;
a time associated with a subcarrier spacing, SCS;
associated with a transmitting timing of the acknowledgement information corresponding to the indication signaling; or
an expire time of a specific timer configured by a higher layer signaling.

96. The communication apparatus of claim 94, wherein the acknowledgement information is carried by one or more of following signaling:
a L1 signaling;
a medium access control, MAC, layer signaling; or
a radio resource control, RRC, layer signaling.

97. The communication apparatus of claim 94, wherein the acknowledgement information comprises one or more of following:
hybrid automatic repeat request acknowledgement information, HARQ-ACK;
medium access control, MAC, layer acknowledgement information; or
timer information for acknowledgement information feedback.

98. The communication apparatus of any of claims 83 to 97, wherein the indication signaling is an activation signaling and/or a deactivation signaling.

99. The communication apparatus of any of claims 83 to 98, wherein the communication apparatus further comprises a transmission module, wherein
the transmission module is used for, in case that the network device activates the cell discontinuous transmission of the target cell, performing the cell discontinuous transmission based on transmission configuration information,
wherein the transmission configuration information comprises one or more of following:
a specific period defined by a protocol;
a time interval configured by the network device; or
transmission configuration information of the cell discontinuous transmission.

100. The communication apparatus of claim 98, wherein the activation signaling and/or the deactivation signaling is any of following:
a L1 signaling;
a medium access control, MAC, layer signaling;
a radio resource control, RRC, layer signaling; or
associated with a signaling for other purpose.

101. The communication apparatus of claim 100, wherein the signaling for other purpose is one or more of following:
a secondary cell deactivation signaling;
a secondary cell activation signaling;
a cell dormancy indication signaling;
a cell wake-up indication signaling; or
a specific bandwidth part, BWP, switching signaling.

102. The communication apparatus of claim 100, wherein a radio network temporary identifier, RNTI, for scrambling cyclic redundancy check, CRC, of the L1 signaling is one or more of following:
an RNTI dedicated to network energy saving;
an RNTI dedicated to cell discontinuous transmission;
a cell RNTI, C-RNTI;
a power saving RNTI, PS-RNTI; or
a configured scheduling RNTI, CS-RNTI.

103. The communication apparatus of any of claims 83 to 102, wherein the cell discontinuous transmission comprises one or more of following:
cell discontinuous transmission, cell DTX;
cell discontinuous reception, cell DRX;
transmission during an activation period of cell DTX;
transmission during an inactivation period of cell DTX;
transmission during an activation period of cell DRX; or
transmission during an inactivation period of cell DRX.

104. A communication apparatus, used in a network device, comprising:
a transmitting module, used for transmitting, in a signaling receiving cell, an indication signaling to a terminal device, wherein the indication signaling is used for activating or deactivating cell discontinuous transmission of a target cell; and
an activating module, used for activating or deactivating the cell discontinuous transmission of the target cell.

105. The communication apparatus of claim 104, wherein the transmitting module is further used for transmitting parameter configuration information to the terminal device.

106. The communication apparatus of claim 105, wherein the parameter configuration information comprises one or more of following:
cell information of the signaling receiving cell;
a type of the indication signaling; or
a time-frequency-space resource location where the terminal device receives the indication signaling.

107. The communication apparatus of claim 105 or 106, wherein the parameter configuration information is obtained through one or more of configuration via higher layer signaling, definition by protocol, or indication in signaling.

108. The communication apparatus of claim 106, wherein the time-frequency-space resource location satisfies one or more of following:
being associated with connected discontinuous reception, C-DRX, of the terminal device; or
being associated with the cell discontinuous transmission.

109. The communication apparatus of claim 106 or 108, wherein the time-frequency-space resource location comprises at least one of a time-domain reception location, a frequency-domain resource location, or a space-domain resource location.

110. The communication apparatus of claim 109, wherein the time-domain reception location is within an activation period of connected discontinuous reception, C-DRX.

111. The communication apparatus of any of claims 104 to 108, wherein the target cell comprises one or more of following:
the signaling receiving cell;
a specific cell;
all serving cells of the terminal device;
all cells in a cell group where the signaling receiving cell is located, wherein the cell group is a cell group for cell discontinuous transmission;
all cells in a cell group configured by the network device;
all cells in a first connected discontinuous reception, C-DRX, group; or
all cells in a secondary connected discontinuous reception, C-DRX, group.

112. The communication apparatus of claim 111, wherein the specific cell comprises a primary cell, PCell, and/or a secondary cell, SCell.

113. The communication apparatus of any of claims 104 to 112, wherein the signaling receiving cell comprises one or more of following:
a primary cell; or
a secondary cell.

114. The communication apparatus of any of claims 104 to 113, wherein the activating module is used for:
activating or deactivating the cell discontinuous transmission of the target cell at a specific time.

115. The communication apparatus of any of claims 104 to 114, wherein the communication apparatus further comprises a receiving module,
wherein the receiving module is used for receiving acknowledgement information transmitted from the terminal device and corresponding to the indication signaling.

116. The communication apparatus of claim 114, wherein a specific time is one or more of following:
a reception timing of the indication signaling;
a timing that is separated from a reception timing of the indication signaling by a given time interval;
a time associated with a subcarrier spacing, SCS;
associated with a transmitting timing of the acknowledgement information corresponding to the indication signaling; or
an expire time of a specific timer configured by a higher layer signaling.

117. The communication apparatus of claim 115, wherein the acknowledgement information is carried by one or more of following signaling:
a L1 signaling;
a medium access control, MAC, layer signaling; or
a radio resource control, RRC, layer signaling.

118. The communication apparatus of claim 115, wherein the acknowledgement information comprises one or more of following:
hybrid automatic repeat request acknowledgement information, HARQ-ACK;
medium access control, MAC, layer acknowledgement information; or
timer information for acknowledgement information feedback.

119. The communication apparatus of any of claims 104 to 118, wherein the indication signaling is an activation signaling and/or a deactivation signaling.

120. The communication apparatus of claim 119, wherein the activation signaling and/or the deactivation signaling is any of following:
a L1 signaling;
a medium access control, MAC, layer signaling;
a radio resource control, RRC, layer signaling; or
associated with a signaling for other purpose.

121. The communication apparatus of claim 120, wherein the signaling for other purpose is one or more of following:
a secondary cell deactivation signaling;
a secondary cell activation signaling;
a cell dormancy indication signaling;
a cell wake-up indication signaling; or
a specific bandwidth part, BWP, switching signaling.

122. The communication apparatus of claim 121, wherein a radio network temporary identifier, RNTI, for scrambling cyclic redundancy check, CRC, of the L1 signaling is one or more of following:
an RNTI dedicated to network energy saving;
an RNTI dedicated to cell discontinuous transmission;
a cell RNTI, C-RNTI;
a power saving RNTI, PS-RNTI; or
a configured scheduling RNTI, CS-RNTI.

123. The communication apparatus of any of claims 104 to 122, wherein the cell discontinuous transmission comprises one or more of following:
cell discontinuous transmission, cell DTX;
cell discontinuous reception, cell DRX;
transmission during an activation period of cell DTX;
transmission during an inactivation period of cell DTX;
transmission during an activation period of cell DRX; or
transmission during an inactivation period of cell DRX.

124. A processor-readable storage medium, storing a computer program, wherein the computer program is used for causing a processor to perform the communication method of any of claims 1 to 21.

125. A processor-readable storage medium, storing a computer program, wherein the computer program is used for causing a processor to perform the communication method of any of claims 22 to 41.
